# EUROPEAN PATENT APPLICATION

(11) **EP 4 447 563 A1**
(43) Date of publication of application: **16.10.2024**
(21) Application number: 24168632.8
(22) Date of filing: 05.04.2024
(51) Int. Cl.: H04W 52/02, H04L 5/00

(54) **POST-DEPLOYMENT IN-FIELD VALIDATION OF AI/ML ENABLED FEATURES**

(30) Priority: 10.04.2023 IN 202341026677
(71) Applicant: Nokia Technologies Oy, 02610 Espoo (FI)
(72) Inventor: GOLD, Dimitri, Espoo (FI); KOVÁCS, István Zsolt, Aalborg (DK); SYED MUHAMMAD, Fahad, Orsay (FR); HASSAN, Sakira, Espoo (FI); KASHYAP, Bharath Ramesh, Bangalore (IN); BELLUR, Vinayak, Bangalore (IN)
(74) Representative: Nokia EPO representatives

(57) **Abstract**

An apparatus configured to: determine that a validation of at least one second functionality has been triggered, wherein a first functionality is in an active mode, wherein the at least one second functionality is in a standby mode; transmit a request for the validation of the at least one second functionality; receive a plurality of reference signals; determine a result of the at least one second functionality based, at least partially, on at least one reference signal of the plurality of reference signals; and
provide the result of the at least one second functionality for the validation of the at least one second functionality.

## Description

### TECHNICAL FIELD

The example and non-limiting embodiments relate generally to verification/validation of functionality and, more particularly, to verification/validation of independent and/or collaborative artificial intelligence or machine learning models.

### BACKGROUND

It is known, in network communication, to test functionality prior to deployment of a device in a live network.

### SUMMARY

The following summary is merely intended to be illustrative. The summary is not intended to limit the scope of the claims.

In accordance with one aspect, an apparatus comprising: at least one processor; and at least one memory storing instructions that, when executed by the at least one processor, cause the apparatus at least to: determine that a validation of at least one second functionality has been triggered, wherein a first functionality is in an active mode, wherein the at least one second functionality is in a standby mode; transmit a request for the validation of the at least one second functionality; receive a plurality of reference signals; determine a result of the at least one second functionality based, at least partially, on at least one reference signal of the plurality of reference signals; and provide the result of the at least one second functionality for the validation of the at least one second functionality.

In accordance with one aspect, a method comprising: determine that a validation of at least one second functionality has been triggered, wherein a first functionality is in an active mode, wherein the at least one second functionality is in a standby mode; transmitting, with a user equipment, a request for the validation of the at least one second functionality; receiving a plurality of reference signals; determining a result of the at least one second functionality based, at least partially, on at least one reference signal of the plurality of reference signals; and providing the result of the at least one second functionality for the validation of the at least one second functionality.

In accordance with one aspect, an apparatus comprising means for performing: transmitting a request for the validation of the at least one second functionality; receiving a plurality of reference signals; determining a result of the at least one second functionality based, at least partially, on at least one reference signal of the plurality of reference signals; and providing the result of the at least one second functionality for the validation of the at least one second functionality.

In accordance with one aspect, a non-transitory computer-readable medium comprising program instructions stored thereon for performing at least the following: causing transmitting of a request for the validation of the at least one second functionality; causing receiving of a plurality of reference signals; determining a result of the at least one second functionality based, at least partially, on at least one reference signal of the plurality of reference signals; and causing providing of the result of the at least one second functionality for the validation of the at least one second functionality.

In accordance with one aspect, an apparatus comprising: at least one processor; and at least one memory storing instructions that, when executed by the at least one processor, cause the apparatus at least to: receive, from a user equipment, a request for validation of at least one second functionality, wherein a first functionality is in an active mode, wherein the at least one second functionality is in a standby mode; transmit, to the user equipment, a plurality of reference signals; receive, from the user equipment, at least one report with respect to the at least one second functionality and the plurality of reference signals; and provide the at least one report to a network side validation entity for the validation of the at least one second functionality.

In accordance with one aspect, a method comprising: receiving, with a base station from a user equipment, a request for validation of at least one second functionality, wherein a first functionality is in an active mode, wherein the at least one second functionality is in a standby mode; transmitting, to the user equipment, a plurality of reference signals; receiving, from the user equipment, at least one report with respect to the at least one second functionality and the plurality of reference signals; and providing the at least one report to a network side validation entity for the validation of the at least one second functionality.

In accordance with one aspect, an apparatus comprising means for performing: receiving, from a user equipment, a request for validation of at least one second functionality, wherein a first functionality is in an active mode, wherein the at least one second functionality is in a standby mode; transmitting, to the user equipment, a plurality of reference signals; receiving, from the user equipment, at least one report with respect to the at least one second functionality and the plurality of reference signals; and providing the at least one report to a network side validation entity for the validation of the at least one second functionality.

In accordance with one aspect, a non-transitory computer-readable medium comprising program instructions stored thereon for performing at least the following: causing receiving, from a user equipment, of a request for validation of at least one second functionality, wherein a first functionality is in an active mode, wherein the at least one second functionality is in a standby mode; causing transmitting, to the user equipment, of a plurality of reference signals; causing receiving, from the user equipment, of at least one report with respect to the at least one second functionality and the plurality of reference signals; and causing providing of the at least one report to a network side validation entity for the validation of the at least one second functionality.

In accordance with one aspect, an apparatus comprising: at least one processor; and at least one memory storing instructions that, when executed by the at least one processor, cause the apparatus at least to: determine to switch from a first functionality to at least one second functionality, wherein the first functionality is in an active mode, wherein the at least one second functionality is in a standby mode; transmit a request to switch from the first functionality to the at least one second functionality; receive, from a base station, a request for validation of the at least one second functionality; receive, from the base station, a plurality of reference signals; determine a result of the at least one second functionality based, at least partially, on at least one reference signal of the plurality of reference signals; and provide the result of the at least one second functionality for the validation of the at least one second functionality.

In accordance with one aspect, a method comprising: determining, with a user equipment, to switch from a first functionality to at least one second functionality, wherein the first functionality is in an active mode, wherein the at least one second functionality is in a standby mode; transmitting a request to switch from the first functionality to the at least one second functionality; receiving, from a base station, a request for validation of the at least one second functionality; receiving, from the base station, a plurality of reference signals; determining a result of the at least one second functionality based, at least partially, on at least one reference signal of the plurality of reference signals; and providing the result of the at least one second functionality for the validation of the at least one second functionality.

In accordance with one aspect, an apparatus comprising means for performing: determining to switch from a first functionality to at least one second functionality, wherein the first functionality is in an active mode, wherein the at least one second functionality is in a standby mode; transmitting a request to switch from the first functionality to the at least one second functionality; receiving, from a base station, a request for validation of the at least one second functionality; receiving, from the base station, a plurality of reference signals; determining a result of the at least one second functionality based, at least partially, on at least one reference signal of the plurality of reference signals; and providing the result of the at least one second functionality for the validation of the at least one second functionality.

In accordance with one aspect, a non-transitory computer-readable medium comprising program instructions stored thereon for performing at least the following: determining to switch from a first functionality to at least one second functionality, wherein the first functionality is in an active mode, wherein the at least one second functionality is in a standby mode; causing transmitting of a request to switch from the first functionality to the at least one second functionality; causing receiving, from a base station, of a request for validation of the at least one second functionality; causing receiving, from the base station, of a plurality of reference signals; determining a result of the at least one second functionality based, at least partially, on at least one reference signal of the plurality of reference signals; and causing providing of the result of the at least one second functionality for the validation of the at least one second functionality.

In accordance with one aspect, an apparatus comprising: at least one processor; and at least one memory storing instructions that, when executed by the at least one processor, cause the apparatus at least to: receive, from a user equipment, a request to switch from a first functionality to at least one second functionality, wherein the first functionality is in an active mode, wherein the at least one second functionality is in a standby mode; transmit, to the user equipment, a request for validation of the at least one second functionality in response to a determination that the at least one second functionality was not previously validated with respect to at least one condition; receive, from the user equipment, an acknowledgment of the request for validation of the at least one second functionality; transmit, to the user equipment, a plurality of reference signals; receive, from the user equipment, at least one report with respect to the at least one second functionality and the plurality of reference signals; and provide the at least one second report to a network side validation entity for the validation of the at least one second functionality.

In accordance with one aspect, a method comprising: receiving, with a base station from a user equipment, a request to switch from a first functionality to at least one second functionality, wherein the first functionality is in an active mode, wherein the at least one second functionality is in a standby mode; transmitting, to the user equipment, a request for validation of the at least one second functionality in response to a determination that the at least one second functionality was not previously validated with respect to at least one condition; receiving, from the user equipment, an acknowledgment of the request for validation of the at least one second functionality; transmitting, to the user equipment, a plurality of reference signals; receiving, from the user equipment, at least one report with respect to the at least one second functionality and the plurality of reference signals; and providing the at least one second report to a network side validation entity for the validation of the at least one second functionality.

In accordance with one aspect, an apparatus comprising means for performing: receiving, from a user equipment, a request to switch from a first functionality to at least one second functionality, wherein the first functionality is in an active mode, wherein the at least one second functionality is in a standby mode; transmitting, to the user equipment, a request for validation of the at least one second functionality in response to a determination that the at least one second functionality was not previously validated with respect to at least one condition; receiving, from the user equipment, an acknowledgment of the request for validation of the at least one second functionality; transmitting, to the user equipment, a plurality of reference signals; receiving, from the user equipment, at least one report with respect to the at least one second functionality and the plurality of reference signals; and providing the at least one second report to a network side validation entity for the validation of the at least one second functionality.

In accordance with one aspect, a non-transitory computer-readable medium comprising program instructions stored thereon for performing at least the following: causing receiving, from a user equipment, of a request to switch from a first functionality to at least one second functionality, wherein the first functionality is in an active mode, wherein the at least one second functionality is in a standby mode; causing transmitting, to the user equipment, of a request for validation of the at least one second functionality in response to a determination that the at least one second functionality was not previously validated with respect to at least one condition; causing receiving, from the user equipment, of an acknowledgment of the request for validation of the at least one second functionality; causing transmitting, to the user equipment, of a plurality of reference signals; causing receiving, from the user equipment, of at least one report with respect to the at least one second functionality and the plurality of reference signals; and causing providing of the at least one second report to a network side validation entity for the validation of the at least one second functionality.

In accordance with one aspect, an apparatus comprising: at least one processor; and at least one memory storing instructions that, when executed by the at least one processor, cause the apparatus at least to: receive, from a user equipment, a request to switch from a first functionality to at least one second functionality, wherein the first functionality is in an active mode, wherein the at least one second functionality is in a standby mode; transmit, to the user equipment, a request for validation of the at least one second functionality; receive, from the user equipment, a request for a configuration for the validation of the at least one second functionality; perform the configuration for the validation of the at least one second functionality; transmit, to the user equipment, a plurality of reference signals; and receive, from the user equipment, at least one first report with respect to the first functionality and the plurality of reference signals.

In accordance with one aspect, a method comprising: receiving, with a base station from a user equipment, a request to switch from a first functionality to at least one second functionality, wherein the first functionality is in an active mode, wherein the at least one second functionality is in a standby mode; transmitting, to the user equipment, a request for validation of the at least one second functionality; receiving, from the user equipment, a request for a configuration for the validation of the at least one second functionality; performing the configuration for the validation of the at least one second functionality; transmitting, to the user equipment, a plurality of reference signals; and receiving, from the user equipment, at least one first report with respect to the first functionality and the plurality of reference signals.

In accordance with one aspect, an apparatus comprising means for performing: receiving, from a user equipment, a request to switch from a first functionality to at least one second functionality, wherein the first functionality is in an active mode, wherein the at least one second functionality is in a standby mode; transmitting, to the user equipment, a request for validation of the at least one second functionality; receiving, from the user equipment, a request for a configuration for the validation of the at least one second functionality; the configuration for the validation of the at least one second functionality; transmitting, to the user equipment, a plurality of reference signals; and receiving, from the user equipment, at least one first report with respect to the first functionality and the plurality of reference signals.

In accordance with one aspect, a non-transitory computer-readable medium comprising program instructions stored thereon for performing at least the following: causing receiving, from a user equipment, of a request to switch from a first functionality to at least one second functionality, wherein the first functionality is in an active mode, wherein the at least one second functionality is in a standby mode; causing transmitting, to the user equipment, of a request for validation of the at least one second functionality; causing receiving, from the user equipment, of a request for a configuration for the validation of the at least one second functionality; the configuration for the validation of the at least one second functionality; causing transmitting, to the user equipment, of a plurality of reference signals; and causing receiving, from the user equipment, of at least one first report with respect to the first functionality and the plurality of reference signals.

In accordance with one aspect, an apparatus comprising: at least one processor; and at least one memory storing instructions that, when executed by the at least one processor, cause the apparatus at least to: obtain a result of at least one functionality wherein the at least one functionality is in a standby mode; and provide a functionality verification report based on the result.

In accordance with one aspect, a method comprising: obtaining, with a validation entity, a result of at least one functionality wherein the at least one functionality is in a standby mode; and providing a functionality verification report based on the result.

In accordance with one aspect, an apparatus comprising means for performing: obtaining a result of at least one functionality wherein the at least one functionality is in a standby mode; and providing a functionality verification report based on the result.

In accordance with one aspect, a non-transitory computer-readable medium comprising program instructions stored thereon for performing at least the following: causing obtaining of a result of at least one functionality wherein the at least one functionality is in a standby mode; and causing providing of a functionality verification report based on the result.

According to some aspects, there is provided the subject matter of the independent claims. Some further aspects are defined in the dependent claims.

### BRIEF DESCRIPTION OF THE DRAWINGS

The foregoing aspects and other features are explained in the following description, taken in connection with the accompanying drawings, wherein:
FIG. 1 is a block diagram of one possible and non-limiting example system in which the example embodiments may be practiced;
FIG. 2 is a diagram illustrating features as described herein;
FIG. 3 is a diagram illustrating features as described herein;
FIG. 4 is a flowchart illustrating steps as described herein;
FIG. 5 is a flowchart illustrating steps as described herein, comprising FIGs. 5A and 5B;
FIG. 6 is a flowchart illustrating steps as described herein;
FIG. 7 is a flowchart illustrating steps as described herein;
FIG. 8 is a flowchart illustrating steps as described herein;
FIG. 9 is a flowchart illustrating steps as described herein;
FIG. 10 is a flowchart illustrating steps as described herein;
FIG. 11 is a flowchart illustrating steps as described herein;
FIG. 12 is a flowchart illustrating steps as described herein; and
FIG. 13 is a flowchart illustrating steps as described herein.

### DETAILED DESCRIPTION OF EMBODIMENTS

The following abbreviations that may be found in the specification and/or the drawing figures are defined as follows:
- 3GPP: third generation partnership project
- 5G: fifth generation
- 5GC: 5G core network
- AI: artificial intelligence
- AMF: access and mobility management function
- BM: beam management
- CE: control element
- cRAN: cloud radio access network
- CSI: channel state information
- CSI-RS: channel state information reference signal
- CU: central unit
- DCI: downlink control information
- DU: distributed unit
- eNB (or eNodeB): evolved Node B (e.g., an LTE base station)
- EN-DC: E-UTRA-NR dual connectivity
- en-gNB or En-gNB: node providing NR user plane and control plane protocol terminations towards the UE, and acting as secondary node in EN-DC
- E-UTRA: evolved universal terrestrial radio access, i.e., the LTE radio access technology
- gNB (or gNodeB): base station for 5G/NR, i.e., a node providing NR user plane and control plane protocol terminations towards the UE, and connected via the NG interface to the 5GC
- HO: handover
- I/F: interface
- KPI: key performance indicator
- L1: layer 1
- LCM: life cycle management
- LTE: long term evolution
- MAC: medium access control
- ML: machine learning
- MME: mobility management entity
- MSE: mean squared error
- ng or NG: new generation
- ng-eNB or NG-eNB: new generation eNB
- NN: neural network
- NR: new radio
- N/W or NW: network
- O-RAN: open radio access network
- PDCP: packet data convergence protocol
- PHY: physical layer
- RAN: radio access network
- RF: radio frequency
- RLC: radio link control
- RRC: radio resource control
- RRH: remote radio head
- RS: reference signal
- RSRP: reference signal received power
- RU: radio unit
- Rx: receiver
- SDAP: service data adaptation protocol
- SGW: serving gateway
- SMF: session management function
- Tx: transmitter
- UE: user equipment (e.g., a wireless, typically mobile device)
- UCI: uplink control information
- UPF: user plane function
- VE: validation entity
- VNR: virtualized network function

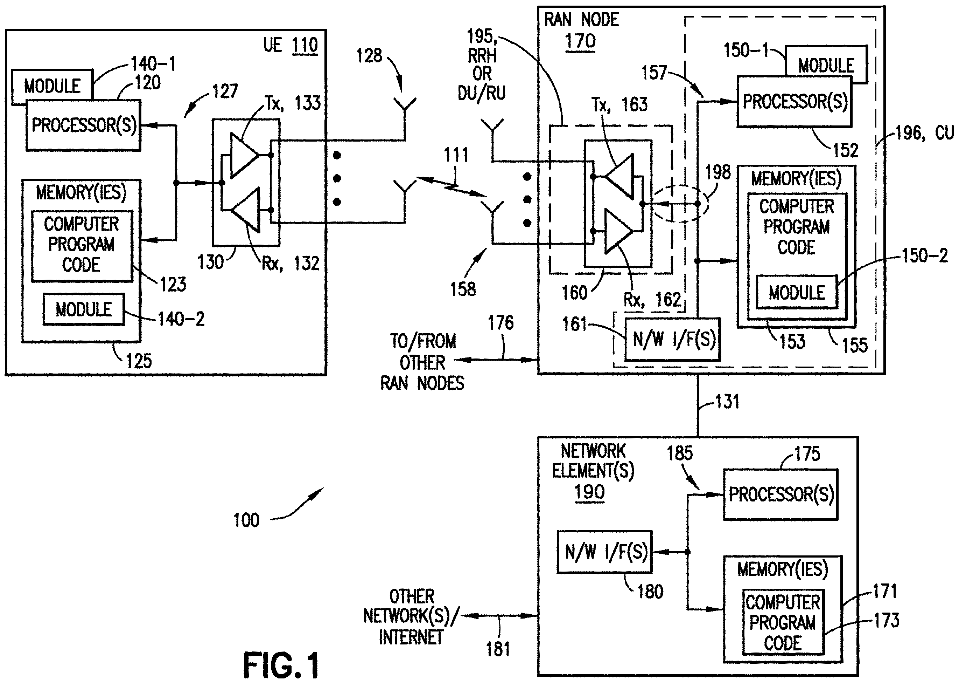

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. A "circuit" may include dedicated hardware or hardware in association with software executable thereon. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station, access point, access node, or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely illustrative functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. For example, a network may be deployed in a tele cloud, with virtualized network functions (VNF) running on, for example, data center servers. For example, network core functions and/or radio access network(s) (e.g. CloudRAN, O-RAN, edge cloud) may be virtualized. Note that the virtualized entities that result from the network virtualization are still implemented, at some level, using hardware such as processors 152 or 175 and memories 155 and 171, and also such virtualized entities create technical effects.

It may also be noted that operations of example embodiments of the present disclosure may be carried out by a plurality of cooperating devices (e.g. cRAN).

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, and other functions as described herein.

In general, the various example embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Having thus introduced one suitable but non-limiting technical context for the practice of the example embodiments of the present disclosure, example embodiments will now be described with greater specificity.

Features as described herein may generally relate to artificial intelligence (AI) and/or machine learning (ML) model(s). For example, an AI/ML model(s) may be located with each of a UE and a base station or network entity (e.g. split between multiple nodes, or a separate model at each node). Alternatively, an AI/ML model may be located with one of a UE or a base station/network entity.

An example of an AI/ML model is a neural network. A neural network (NN) is a computation graph consisting of two or more layers of computation. Neural networks, and other machine learning tools, may be able to learn properties from input data, either in a supervised way or in an unsupervised way. Such learning may be the result of a training algorithm, or of a meta-level neural network providing a training signal.

In the present description, the terms "model", "AI model", "AI/ML model", "ML algorithm", and "ML model" may be interchanged with each other; where an example embodiment is described with reference to one type of model, another type of model may be substituted.

In the present description, an ML model may comprise one or more functionalities. A functionality may comprise one or more functions and/or features. An example of a function/feature is CSI reporting. One or more functionalities may provide the function/feature of CSI reporting. For example, CSI reporting may be provided with regular (non-ML) CSI Type II reporting, or with ML-based functionalities, such as CSI compression or CSI prediction. AI/ML enabled functionalities may be implemented with one or several ML models. A vendor might not disclose the structure and number of these models; hence, we may need to validate the functionality (or version of the functionality). If information about models is disclosed, then validation on the model level may be done; otherwise, we may consider validation of a functionality.

In the present description, the terms "ML functionality", "AI functionality", "functionality", and "AI/ML functionality" may be interchanged with each other.

In the present description, the terms "ML-enabled function", "AI-enabled function", "AI/ML-enabled function", "AI/ML enabled feature", and "AI/ML-enabled feature" may be interchanged with each other.

A study of Artificial Intelligence (AI)/ Machine Learning (ML) for New Radio (NR) air interface is now ongoing in 3GPP Rel-18. One of the objectives of the study is to cover the interoperability and testability aspect of the newly defined AI/ML enabled features [RP-213599]:
"...Interoperability and testability aspects, e.g., (RAN4) - RAN4 only starts the work after there is sufficient progress on use case study in RANI and RAN2
Requirements and testing frameworks to validate AI/ML based performance enhancements and ensuring that UE and gNB with AI/ML meet or exceed the existing minimum requirements if applicable
Consider the need and implications for AI/ML processing capabilities definition..."

The AI/ML models in the air interface can support different collaboration levels. At RAN1#109-e meeting, the following agreement was achieved:
"...Agreement
Take the following network-UE collaboration levels as one aspect for defining collaboration levels
   Level x: No collaboration
   Level y: Signaling-based collaboration without model transfer
   Level z: Signaling-based collaboration with model transfer..."

Level x models may be considered one-sided models, which are independent models that may be deployed at the user equipment (UE) or network (NW) side. Two-sided models, for example at collaboration levels y and z, assume that the output(s) of one model may be used as input(s) for the other model; this may be considered at design, training, validation, and interoperability of the models.

In RAN1#112, to further detail the cases of model delivery and transfer and training location, the following agreement was achieved:
"...Agreement
To facilitate the discussion, consider at least the following Cases for model delivery/transfer to UE, training location, and model delivery/transfer format combinations for UE-side models and UE-part of two-sided models..."

TABLE 1 further illustrates the agreement:

**TABLE 1**

| **Case** | **Model delivery/transfer** | **Model storage location** | **Training location** |
|---|---|---|---|
| **y** | model delivery (if needed) over-the-top | Outside 3gpp Network | UE-side / NW-side / neutral site |
| **z1** | model transfer in proprietary format | 3GPP Network | UE-side / neutral site |
| **z2** | model transfer in proprietary format | 3GPP Network | NW-side |
| **z3** | model transfer in open format | 3GPP Network | UE-side / neutral site |
| **z4** | model transfer in open format of a known model structure at UE | 3GPP Network | NW-side |
| **z5** | model transfer in open format of an unknown model structure at UE | 3GPP Network | NW-side |

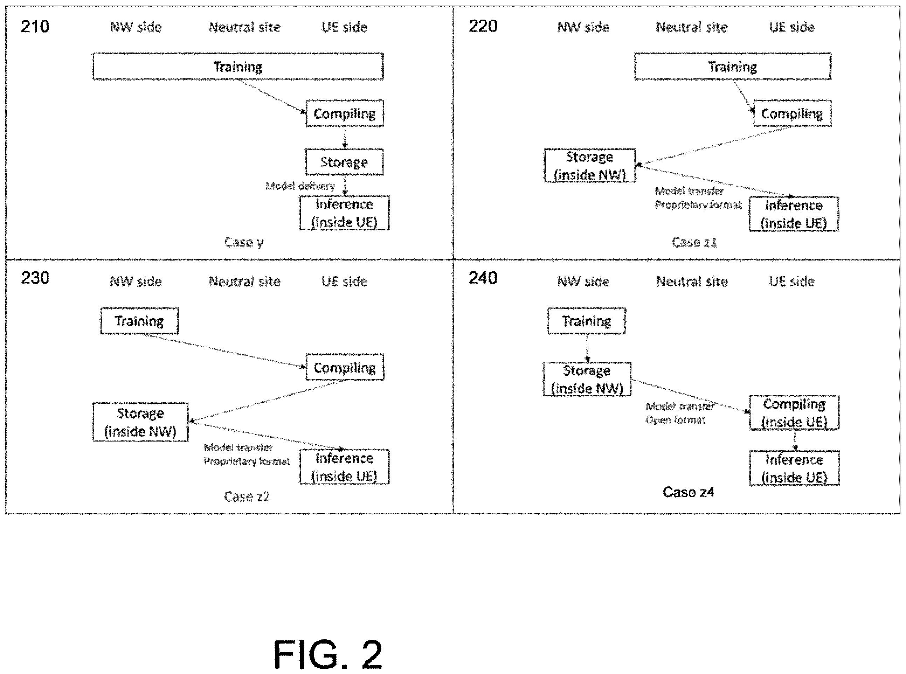

Referring now to FIG. 2, illustrated are cases/examples of AI/ML models, showing the location at which the model is delivered and/or transferred, and the location of training. At 210, case y is illustrated, where training occurs at the NW, neutral site, and UE, while model delivery occurs at the UE. At 220, case z1 is illustrated, where training occurs at the neutral site and UE, while model transfer occurs in a proprietary format. At 230, case z2 is illustrated, where training occurs at the NW, while model transfer occurs in a proprietary format. At 240, case z4 is illustrated, where training occurs at the NW, while model transfer occurs in an open format.

For model and functionality-based identification, the following agreement was achieved in RAN#112:
"...Agreement
For UE-side models and UE-part of two-sided models:
   For AI/ML functionality identification
      Reuse legacy 3GPP framework of Features as a starting point for discussion.
      UE indicates supported functionalities/functionality for a given sub-use-case.
      UE capability reporting is taken as starting point.
   For AI/ML model identification
      Models are identified by model ID at the Network. UE indicates supported AI/ML models.
   In functionality-based LCM
      Network indicates activation/deactivation/fallback/switching of AI/ML functionality via 3GPP signaling (e.g., RRC, MAC-CE, DCI).
      Models may not be identified at the Network, and UE may perform model-level LCM.
         Study whether and how much awareness/interaction NW should have about model-level LCM
   In model-ID-based LCM, models are identified at the Network, and Network/UE may activate/deactivate/select/switch individual AI/ML models via model ID..."

Furthermore, in recent RAN1 agreements, there is an emphasis on studying testing and operability aspects of AI/ML models and their performances. As the discussion in RAN4 is starting in April 2023 from RAN4#106bis meeting, the focus on testability aspects is expected to receive more attention.

Since AI/ML based functionalities in wireless communication is a relatively new topic, it is a new challenge to have correct and meaningful ways to test it, both from the performance as well as the interoperability points of view.

In the present disclosure, the terms "validation" and "verification" may be used interchangeably. However, it may be noted that the definitions of these terms may, in general, be inconsistent. For example, the PMBOK guide, a standard adopted by the Institute of Electrical and Electronics Engineers (IEEE), defines them as follows in its 4th edition (May 2011 - IEEE Draft Guide: Adoption of the Project Management Institute (PMI) Standard: A Guide to the Project Management Body of Knowledge (PMBOK Guide)-2008". IEEE P1490/D1, May 2011 (4th ed.). IEEE: 452. June 2011. doi:10.1109/IEEESTD.2011.5937011 (inactive 31 December 2022). Retrieved 28 March 2017.):
"... Validation. The assurance that a product, service, or system meets the needs of the customer and other identified stakeholders. It often involves acceptance and suitability with external customers. Contrast with verification...
... Verification. The evaluation of whether or not a product, service, or system complies with a regulation, requirement, specification, or imposed condition. It is often an internal process. Contrast with validation..."

The definition of "validation" may be specifically considered in the present disclosure.

There are several challenges associated with testing (e.g. conformance, type approval, certification, etc.) of AI/ML-enabled features.

For example, the performance of AI/ML-enabled features may change considerably during the lifetime of the device. Current testing procedures assume that the modem firmware does not change with time, or if changed, then testing should be performed once again. Therefore, the results of the tests that were performed before the deployment of the device in the real network stay without changes. However, this may not be the case with AI/ML-enabled features.

For example, we cannot assume that the results of pre-deployment tests are applicable anymore once the ML-enabled feature is deployed in the device and/or in the network because the ML model/functionality may be updated occasionally or even continuously (e.g. continual/stateful/reinforcement learning).

For example, full re-testing of the device after every model/functionality update may be either too tedious or impossible to carry out.

For example, the testing of compatibility and interoperability of the updated functionalities/models in between all possible devices and network equipment models of different vendors may not be feasible either. This may be especially relevant in the case of two-sided models, when a change of the model on one side (at UE or in the NW) may cause model incompatibility.

For example, the testing of any local/dedicated ML model/functionality within the device (e.g. UE side model) may be more challenging if mobility is considered. In this case, needed changed in the functionality may be more frequent, and it may be possible that the device might face a configuration that was not validated in the past.

For example, assuming that AI/ML functionalities are used to support air interface mechanisms, the details of the ML models/algorithms, and/or which ML model exactly is used (or going to be modified/updated), may not be shared in between the device and the network.

Other challenges may be associated with testing (e.g. conformance, type approval, certification, etc.) of AI/ML-enabled features.

Example embodiments of the present disclosure may address post-deployment validation/verification, or lightweight testing, of AI/ML-enabled features due to, for example, the (software) updates in those.

In an example embodiment, any change in the functionality and/or AI/ML model may require verification before it may be used in the live network. A need for verification may be triggered by, for example, an update in the model/functionality performed locally; a new model/functionality version received at the device from a central repository from the vendor or an operator; a change in one side of two-sided model; a switch/handover (HO) to a different cell; etc.

In an example embodiment, it may be assumed that, after the new/updated ML model/functionality is ready for use (i.e., it is trained, compiled, available in the device/NW, etc.) and before it is activated in the device or in the network, it may stay in the ML-standby mode. This means that the ML model may be ready to be used (i.e. for inference within a ML-enabled feature), but it may require further validation and explicit activation involving signaling and control from the network or operator.

In an example embodiment, in-field (in-RAN live operation) validation may be performed for post-deployment validation/verification of ML enabled features, functionalities, and/or ML models.

In an example embodiment, the information exchange necessary for the verification may happen between devices in the live network, for example over the standardized 3GPP Radio Access Network (RAN) interfaces (e.g. Uu interface) using various types of signaling (e.g. Radio Resource Control (RRC), Medium Access Control (MAC), Downlink Control Information (DCI), Uplink Control Information (UCI) signaling).

In an example embodiment, validation may be performed in the network. In this case, the network may transmits signals (e.g. CSI-RS) in a special configuration, and/or information necessary for validation, to the UE (e.g. minimum accuracy, proxy KPI thresholds). Then, the UE may provide the results obtained based on ML inference back to the network, where the validation may take place.

In an example embodiment, validation may be performed in the device. In this case, the NW may only take an assisting role in the validation, for example by transmitting signals (e.g. CSI-RS) in a special configuration and/or by providing additional information/signals required to verify the validation feedback from the UE. In an example embodiment, even though the validation is done fully at the device, the NW may require more information about the result of validation. Such information may be provided in an extended report.

In an example embodiment, validation may be performed in both the network and the device. In this case, the UE may first validate the UE-side model, as in the case where validation may be performed in the device, and then the network may validate the full model (UE and NW sides combined), as in the case where validation may be performed in the network.

In an example embodiment, the validation process of the ML enabled feature, functionality, and/or ML model(s) may take place within a validation entity (VE). This entity may be a software function/process/service. For example, it may be vendor-specific and deployed at the UE or gNB, or it may be vendor-independent and deployed on a dedicated server.

In an example embodiment, the VE may compare provided information (e.g. outcomes of ML model inference in terms of proxy KPIs or direct ML model output) with the expected outcomes or reference data (when available).

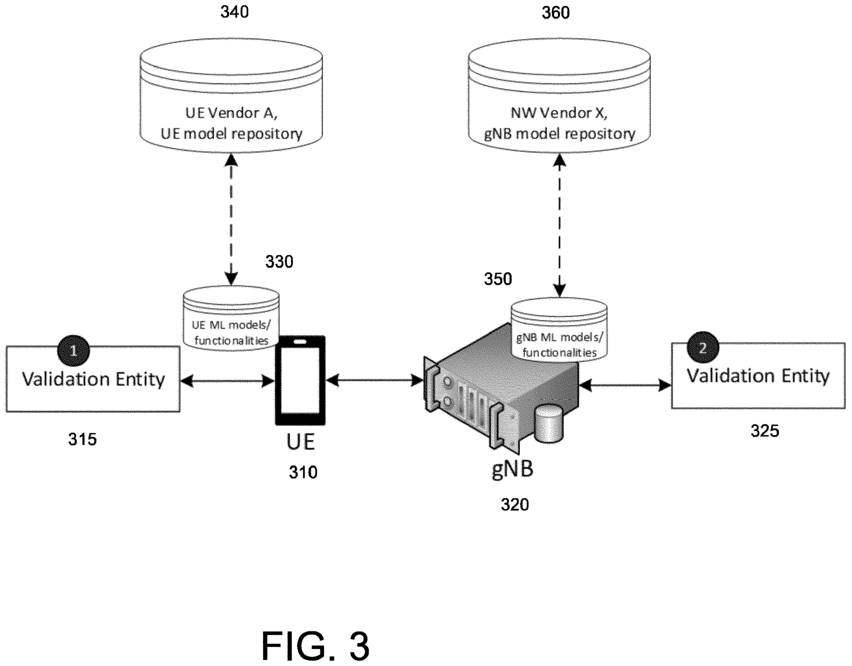

Referring now to FIG. 3, illustrated is an example of a generic architecture for in-field validation of the AI/ML enabled features. A validation entity (VE) may be located on the device/UE side and/or on the gNB/network side; in the example of FIG. 3, a first validation entity (315) is located at the UE side (310) (e.g. accessible to the UE or part of the UE), and a second validation entity (325) is located at the network side (320 (e.g. accessible to the gNB, part of the network, or part of the gNB). The use of the VE, either at UE, NW, or both sides, may be defined by the feature design. For example, for the single sided model based cases, where the ML models (330) may only be located at the UE (e.g. CSI prediction, Beam prediction use-cases), UE-based validation may be used. Whereas, for two-sided model based cases (e.g. CSI feedback), where models may be located at both UE (330) and at the NW side (350), the VE at the NW side, or both at the UE and at the NW, may be used.

Model repositories may be used to store and exchange the models that are used at UE or NW. Additionally, they may be the source of updated models for in-field validation, and may also store the results of model/functionality validation. In the example of FIG. 3, the UE ML models/functionalities (330) may be stored at a UE model repository provided by UE vendor A (340) (alternatively, functionality repository or centralized repository). In the example of FIG. 3, the gNB ML models/functionalities (350) may be stored at a gNB model repository provided by NW vendor X (360) (alternatively, functionality repository or centralized repository).

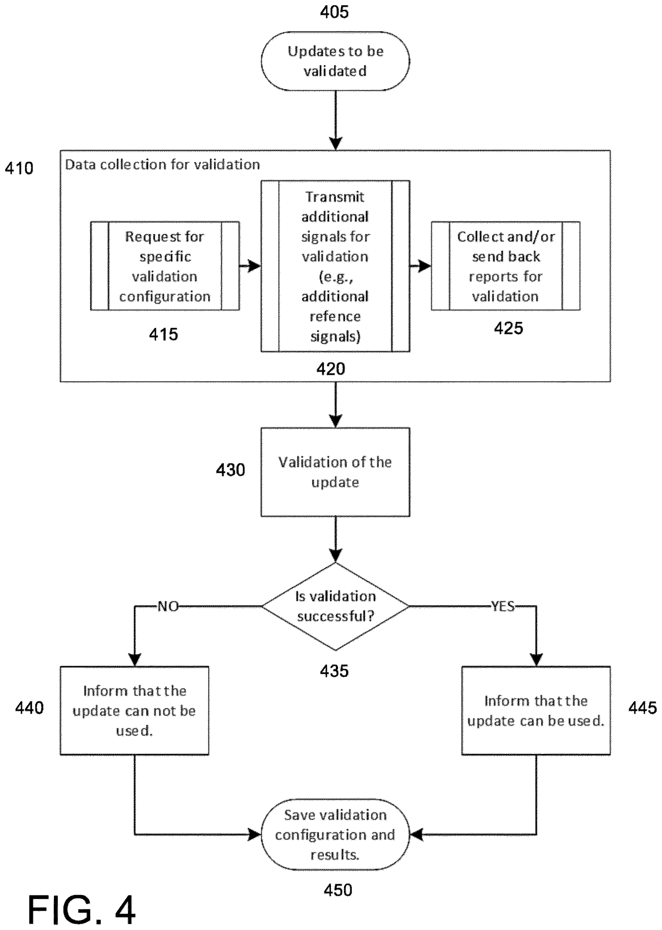

Referring now to FIG. 4, illustrated is an example of a general workflow for in-field model/functionality verification. The workflow may be used for the validation of stand-by functionality/model in the live network (i.e. in-field). The workflow may be performed with a VE, whether at the UE side, the network side, or both.

At 405, updates to a ML model/functionality may be received that are to be validated. In other words, the validation process may be triggered.

In an example embodiment, data collection may take place in the live 3GPP network, for the standby model/functionality, through the existing 3GPP-based interfaces. This process may not require sharing of detailed information about the underlying models between the UE and the NW.

Referring now to FIG. 4, at 410, data may be collected for the validation. At 415, a specific validation configuration may be requested (e.g. by the UE if initiated by the UE). At 420, additional signals for validation may be transmitted by the NW. For example, additional reference signals may be transmitted. At 425, reports for validation may be collected (e.g. locally by a UE) and/or sent back (e.g. to the NW). For example, if validation is performed at the UE side, the UE may not send reports back to the NW. For example, if validation is performed at the NW side (or at both the UE and network sides), reports may be sent to the NW by the UE; the NW may collect the reports for use in validation.

When the required amount of validation data is collected, the VE may conclude about the validity of the model for further use, and may inform the initiator of the validation request about the outcome.

Referring now to FIG. 4, at 430, validation of the update may be performed. This may be performed at a VE at either the UE or the gNB side (or both). At 435, it may be determined whether the validation was successful. If no, at 440 the initiating entity (either the UE or NW, depending on the model/functionality design) may be informed that the update cannot be used. If yes, at 445 the initiating entity may be informed that the update can be used. At 450, the validation configuration and results may be saved.

In an example embodiment, a new validation entity may be implemented that is configured to perform a validation process with respect to ML enabled feature(s), functionality(ies), and/or ML model(s). The validation entity may further compare outcomes of ML model inference, for example in terms of proxy KPIs or direct ML model output, with the expected outcomes or reference data.

In an example embodiment, in-field (in-RAN live operation) validation may be performed for post-deployment validation/verification of ML enabled feature(s), functionality(ies), and/or ML model(s). In an example embodiment, signaling/information may be exchanged for validation between devices in a live network.

Following the ongoing Rel-18 3GPP SI, the following cases for model validation may be considered: change in the two-sided model at the UE (e.g. compressed CSI encoding); change of the two-sided model at the NW (e.g. compressed CSI decoding); change of the model/functionality at the UE (e.g. CSI or beam prediction); and/or update of the model/functionality at the NW side (e.g. CSI or beam prediction).

In the following description, examples of validation in such scenarios are considered. However, these examples are not limiting; example embodiments of the present disclosure may be considered in other scenarios, and/or in combinations of such scenarios.

In an example embodiment, in-field validation of a two-sided model may be performed via NW-based verification. The two-sided model may be implemented on both the UE and NW sides. An example of such functionality/model in 3GPP Rel-18 SIis AI/ML compression of Channel State Information (CSI) feedback.

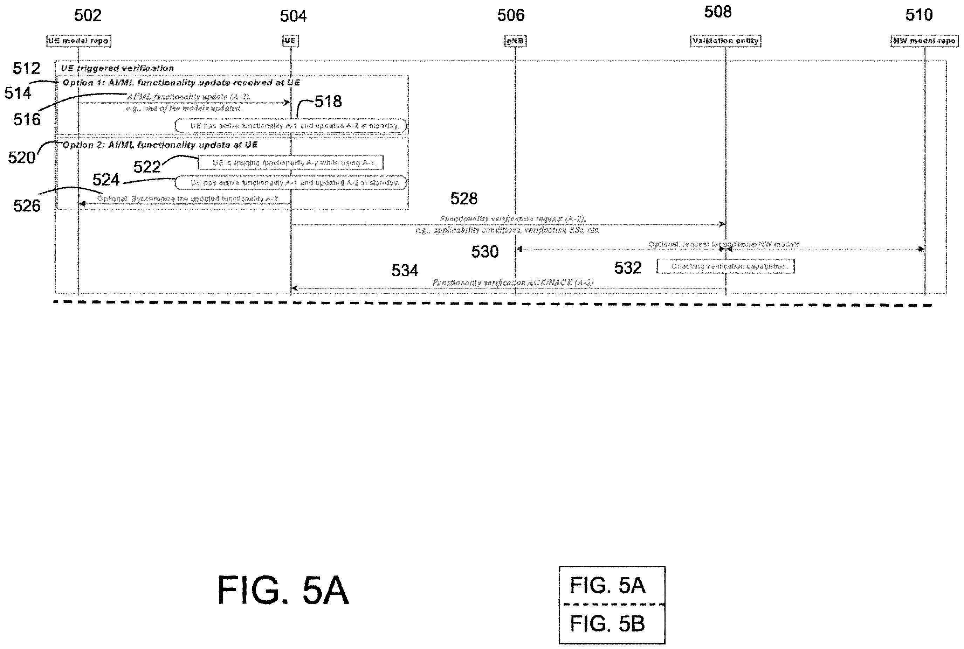

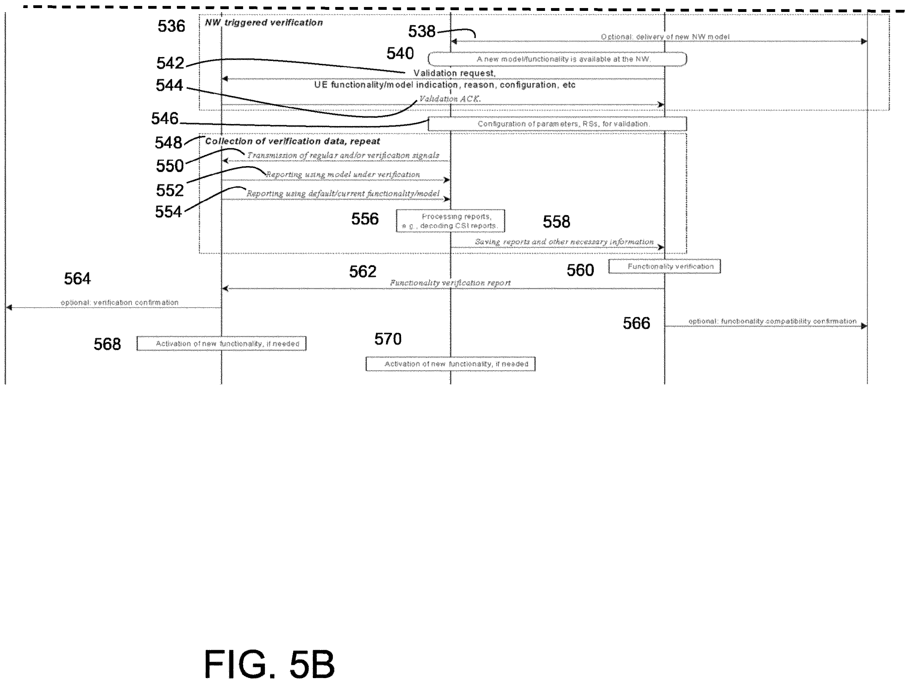

Referring now to FIG. 5, illustrated is a message sequence diagram for two-sided model/functionality verification at the network-based VE. The validation may be triggered by the change/update of the functionality/model on the UE side (512) (Option 1 (514) and Option 2 (520)). Alternatively, validation may be initiated by the request from the NW (536).

In an example embodiment, the update of the model/functionality may be triggered either externally (Option 1 (514), for example delivered from the UE model repository) or internally from inside the UE (Option 2 (520), for example contiguous learning).

In UE triggered verification option 1: AI/ML functionality update received at UE, at 516, an AI/ML functionality update (A-2) may be received by the UE (504) from the UE model repository (502). The AI/ML functionality update (A-2) may, for example, be an update to one of the models. At 516, the UE (504) may have active functionality in A-1 and updated A-2 in standby.

In UE triggered verification option 2: AI/ML functionality update at UE, at 522, the UE (504) may train functionality A-2 while using A-1. At 524, the UE (504) may have active functionality A-1 and updated A-2 in standby. At 526, the UE (504) may optionally synchronize the updated functionality A-2 to the UE model repository (502). Alternatively, a UE functionality repository or a centralized repository may be updated.

In an example embodiment, the updated functionality may need to be verified; hence, the UE may send a verification request to the NW. In UE triggered verification (512), at 528, the UE (504) may transmit, to the validation entity (508), a functionality verification request regarding A-2. The request may carry additional information that may be needed for the verification of the models, such as applicability conditions and updated configuration, model inputs/outputs, reference symbol (RS) configuration, etc. In an example embodiment, the verification request may be joined with a functionality change indication sent from the UE (504) to the NW (e.g. at 528).

In an example embodiment, it may be checked and confirmed to the UE (504) that the requested verification may take place. In other words, the UE (504) may receive an indication that the request configuration is supported by the gNB. If needed, verification may be made for several NW models. In this case, these models may be used in the standby mode at the NW side (i.e. in parallel to the ongoing operation and model(s) currently used at the NW side).

At 530, requests for additional NW models may optionally be transmitted between the gNB (506), the validation entity (508), and the NW model repository (510) (alternatively, functionality repository or centralized repository). At 532, the validation entity (508) may check verification capabilities. At 534, the validation entity (508) may transmit, to the UE (504), a functionality verification ACK/NACK with respect to A-2.

In an example embodiment, the request for verification may be triggered from the NW side (536). In an example embodiment, the verification may be triggered by the NW because of the update/new version/etc. at the NW side of the two-sided model. Alternatively, the NW may need to verify serval alternative NW models, and their respective compatibility with the current UE model. In another example embodiment, the verification may be triggered by the NW because of a switch of the UE from one gNB to another (e.g., HO). In another example embodiment, the verification may be triggered by the NW because of activation of a new model/functionality on the UE side (e.g. in response to UE signaling of the availability) that was not validated before with the currently used NW model. In another example embodiment, the verification may be triggered by a change of NW/UE configuration or propagation channel that may necessitate the use of a new model/functionality.

In an example embodiment, the NW may indicate the UE functionality/model that is to be used for validation.

At 538, a new NW model may optionally be delivered between the gNB (506) and the NW model repository (510) (alternatively, functionality repository or centralized repository). At 540, a new model functionality may be available at the NW, for example at the gNB (506) and the validation entity (508). At 542, the validation entity (508) may transmit, to the UE (504) a validation request. The validation request may include, for example, an indication of the UE functionality model to be validated, the reason for the validation, a configuration for the validation, etc. Additional information may be carried by the request, for example the length of the validation, specific configuration of RSs for validation, etc.

At 544, the UE (504) may transmit, to the validation entity (508), a validation acknowledgment. In an example embodiment, the UE may not be allowed to use the model/functionality that is marked for verification before the verification process has succeeded or completed.

In an example embodiment, the NW may apply the necessary parameters for validation. At 546, the gNB (506) and the validation entity (508) may perform configuration of parameters and/or reference signals for the validation process.

At 548, collection of verification data may be performed and/or repeated. At 550, the gNB (506) may transmit, to the UE (504), regular and/or verification signals. In an example embodiment, regular NW configuration (e.g. already configured RSs) may be used by the stand-by model, or by the model indicated for validation. In another example embodiment, special validation RSs or other signals may be transmitted.

In an example embodiment, the UE may provide reports (e.g. compressed CSI feedback) that are marked for validation through the regular Uu interface, for example in UCI. In an example embodiment, the reports may be marked for validation with a binary flag. A report that is to be used for validation may not be used for regular NW operation. In an example, the report using the model/functionality under verification (552) may include the flag, while the report using the default/current functionality/model (554) may not include the flag. Alternatively, the report using the model/functionality under verification (552) may include the flag that is equal to 1, which may indicate that the report is to be used for validation, while the report using the default/current functionality/model (554) may include the flag that is equal to 0, which may indicate that the report is to be used for regular operation (i.e. not for validation).

At 552, the UE (504) may transmit, to the gNB (506), reports using the model under verification. At 554, the UE (504) may transmit, to the gNB (506), reports using the default/current functionality/model. In an example embodiment, regular reports based on currently active functionality/models may be used. They may be used for regular network operation or for validation purposes as well.

It may be noted that while the report using the model/functionality under verification (552) may comprise compressed CSI feedback, the report using the default/current functionality/model (554) may comprise non-compressed feedback (e.g. legacy CSI Type II feedback).

In an example embodiment, normal network operation may continue while collection of the validation reports from the UE is performed.

At 556, the gNB (506) may process the reports. For example, the gNB (506) may decode CSI reports. In an example embodiment, the reports may be saved for further processing by the VE.

At 558, the gNB (506) may transmit, to the validation entity (508), reports and/or other information for the verification.

At 560, the verification entity (508) may perform functionality/model verification. Different approach may be applied for model verification. In an example embodiment, the UE may use model M0 and retrain the model after t+n, n>0. We may refer to this updated model as model M1, which may need to be verified by the NW before using it. The UE may send p = {1, 2, 3, ..} subsequent verification reports to the NW up to time t+n+m, m > 0, for example in order to ensure the stability of the performance of the model M1. In an example embodiment, one way to validate the model M1 stability may be to compare the reports/results of inference from model M1 and model M0. If they are close enough, for all p reports, or for xx% (e.g., 90%) of the reports, then M1 may be assumed to be verified. In another example embodiment, the NW model may be used to decode the information provided by the UE model/functionality under verification. If decoding is successful, or close to the expected results for p reports, then verification may be considered successful.

At 562, the verification entity (508) may transmit, to the UE (504), a functionality verification report, which may provide the results of the verification. At 564, the UE (504) may optionally transmit, to the UE model repository (502) (alternatively, functionality repository or centralized repository), a verification confirmation, which may provide the results of the verification. In other words, the results of validation may be saved into the UE model/functionality repository (502); this may enable not validating the same functionality or a combination of UE-NW models again. In other words, once a model or functionality is validated in certain conditions, it may not need to be validated again unless one or more of the conditions change. While the conditions remain the same, or revert to a set of conditions that were already tested/validated, validation of the model or functionality is not repeated.

In an example, UE model U-1 may have been validated with NW models N-2 and N-3. Then, it may be assumed that all UEs that have this version of the model do not need to validate the model with these NW models; as the validation has already been performed for that set of conditions, it does not need to be repeated.

At 566, the verification entity (508) may optionally transmit, to the NW model repository (510) (alternatively, functionality repository or centralized repository), a functionality compatibility confirmation. In other words, the results of validation may be saved into the NW model/functionality repository (510) (alternatively, functionality repository or centralized repository); this may enable not validating the same functionality or a combination of UE-NW models again.

At 568, the UE (504) may activate the new functionality, if needed. At 570, the gNB (506) may activate the new functionality, if needed. For example, if the new functionality/model is found/indicated to be valid, it may be activated.

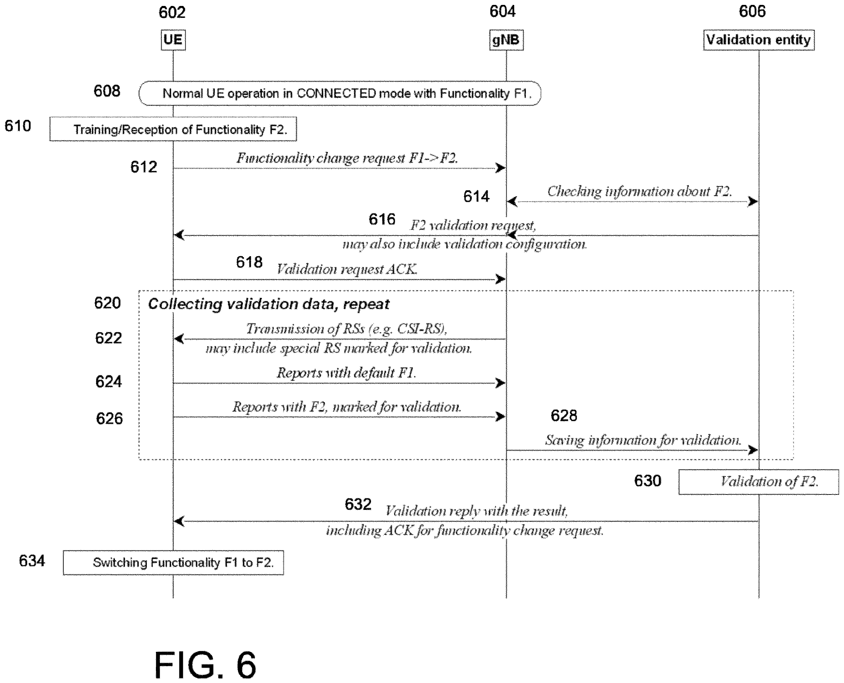

Referring now to FIG. 6, illustrated is a message sequence diagram for in-field validation of a UE-based functionality update using NW-based verification, for example at a network-based VE. An AI/ML prediction functionality (e.g., CSI prediction or beam prediction) may be updated on the UE side; verification may take place at the network-based VE.

At 608, the UE (602) may perform normal UE operation in a connected mode with functionality F1 with the gNB (604). In an example embodiment, the need for functionality validation may be triggered by a need to switch from currently used functionality F1 to a new functionality F2. At 610, the UE (602) may train F2, or receive functionality F2. At 612, the UE (602) may transmit, to the gNB (604), a functionality change request with regard to switching from functionality F 1 to functionality F2. Alternatively, the switch may be from a currently used functionality F2 to a trained/updated version of the functionality F2.

At 614, the gNB (604) and the validation entity (606) may check information about functionality F2. For example, the gNB may check whether functionality F2 was already verified before. The gNB (604) may optionally communicate with the model/functionality repository as well (alternatively, centralized repository). If F2 is already validated, then the validation procedure may be unnecessary; the validation entity (606) may transmit, to the UE (602) a validation reply, as at 632. In the example of FIG. 6, it is assumed that F2 was not verified before, such that the result of checking information about F2 is that the validation procedure should continue.

At 616, the validation entity (606) may transmit, to the UE (602) via the gNB (604), a F2 validation request. The validation request may include a validation configuration. At 618, the UE (602) may transmit, to the gNB (604), a validation request acknowledgement.

At 620, validation data may be collected; the collection process may be repeated. At 622, the gNB (604) may transmit, to the UE (602) a transmission of RSs (e.g. CSI-RS), which may include special RS marked for validation(e.g. verification-specific RSs). At 624, the UE (602) may transmit, to the gNB (604), reports with respect to default functionality F1 (or an untrained/non-updated version of F2). At 626, the UE (602) may transmit, to the gNB (604), reports with respect to F2 (or a trained/updated version of F2), which is marked for validation.

At 628, the gNB (604) may save, to the validation entity (606), information for validation. The information may be based, at least partially, on the received reports.

At 630, the validation entity (606) may perform validation of F2. The validation may be similar to the validation performed at 560 in FIG. 5. At 632, the validation entity (606) may transmit, to the UE (602) a validation reply with a result of the validation. If functionality F2 is determined to be validated, then the validation reply may include an acknowledgement for the functionality change request. At 634, the UE (602) may switch from functionality F1 to F2.

While not shown in FIG. 6, the results of the F2 verification may also be reported to some external functionality/model repository (alternatively, centralized repository). This information may be used to avoid repetitive validation of the same functionality if it was already verified with a particular NW/gNB configuration/version.

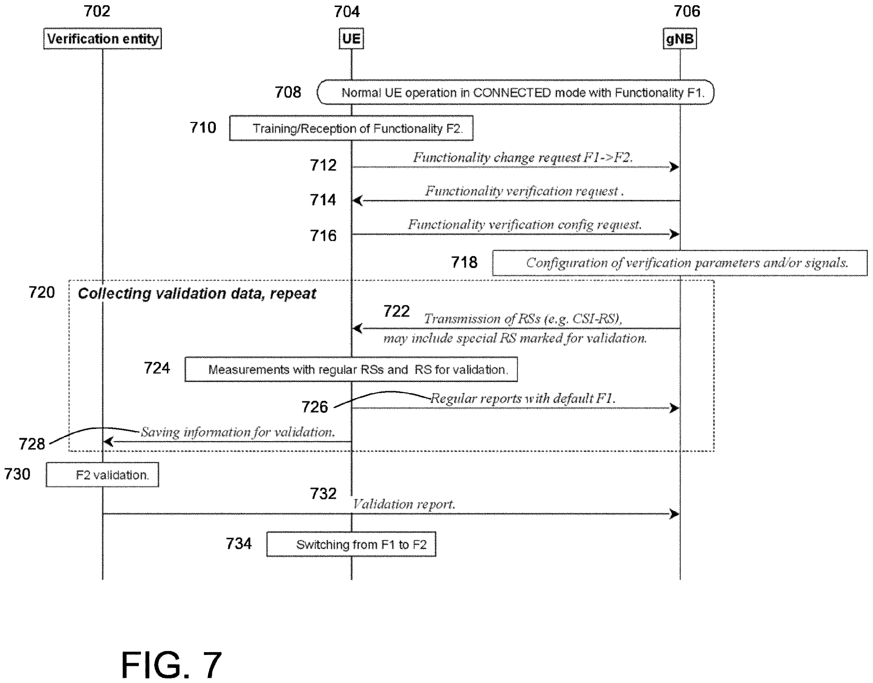

Referring now to FIG. 7, illustrated is a message sequence diagram for in-field validation of a UE-based functionality update using UE-based verification, for example at a UE-based VE.

At 708, the UE (704) may perform normal UE operation in a connected mode with functionality F1, with the gNB (706). At 710, the UE (704) may perform training/reception of functionality F2. At 712, the UE (704) may transmit, to the gNB (706), a functionality change request for switching from functionality F1 to functionality F2. At 714, the gNB (706) may transmit, to the UE (704), a functionality verification request. At 716, the UE (704) may transmit, to the gNB (706), a functionality verification configuration request. At 718, the gNB (706) may perform configuration of verification parameters and/or signals.

In an example embodiment, the validation of the functionality F2 is performed by the VE at the UE side, based on (reference) signals transmitted by the gNB, including special signals for verification, if configured.

At 720, validation data may be collected. The collection of the validation data may be repeated. At 722, the gNB (706) may transmit, to the UE (704), a transmission of RSs (e.g. CSI-RS). The transmission may include special RS marked for validation. At 724, the UE (704) may perform measurements with regular RSs and with RSs marked for validation. At 726, the UE (704) may transmit, to the gNB (706), regular reports with default functionality F1.

In an example embodiment, the UE may compare the results of prediction with the measurements done by the transmitted signals, for example determining whether the predicted RSRPs of the beams, or predicted CSI, matches the measurements.

At 728, the UE (704) may save, to the verification entity (702), information for validation. For example, the results of validation may be saved in some external repository or database (e.g. model repository, functionality repository, central repository, etc.) for further use.

At 730, the VE (702) may perform F2 validation. In an example embodiment, the result of validation may be reported back to the gNB, but the gNB may not itself perform validation. At 732, the VE (702) may transmit, to the gNB (706), a validation report. In an example embodiment, the validation report may be a short report with information that validation has passed/failed at the UE. In an alternative example embodiment, the validation report may be an extended report with more detailed information and statical results for verification.

At 734, the UE (704) may switch from F1 to F2.

Example embodiments of the present disclosure may be used to verify AI/ML enabled functionalities in the live network.

Example embodiments of the present disclosure may become a part of testing/validation procedure for AI/ML-enabled features.

In an example embodiment, a UE may perform verification of a NW-side model.

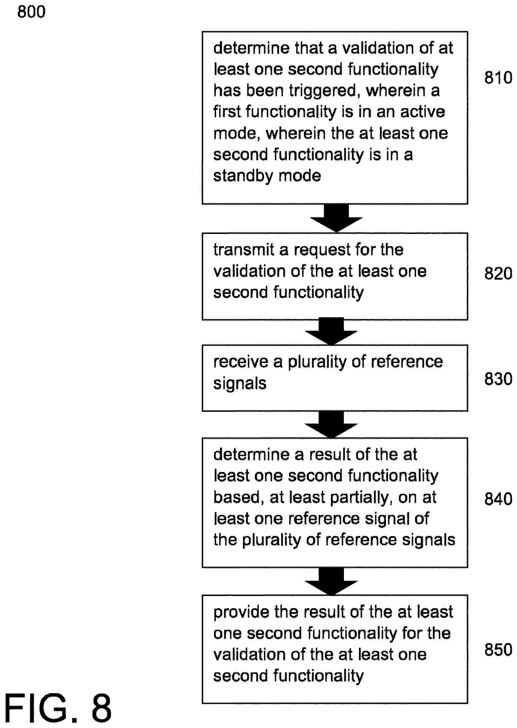

FIG. 8 illustrates the potential steps of an example method 800. The example method 800 may include: determining that a validation of at least one second functionality has been triggered, wherein a first functionality is in an active mode, wherein the at least one second functionality is in a standby mode, 810; transmitting a request for the validation of the at least one second functionality, 820; receiving a plurality of reference signals, 830; determining a result of the at least one second functionality based, at least partially, on at least one reference signal of the plurality of reference signals, 840; and providing the result of the at least one second functionality for the validation of the at least one second functionality, 850. The example method 800 may be performed, for example, with a UE.

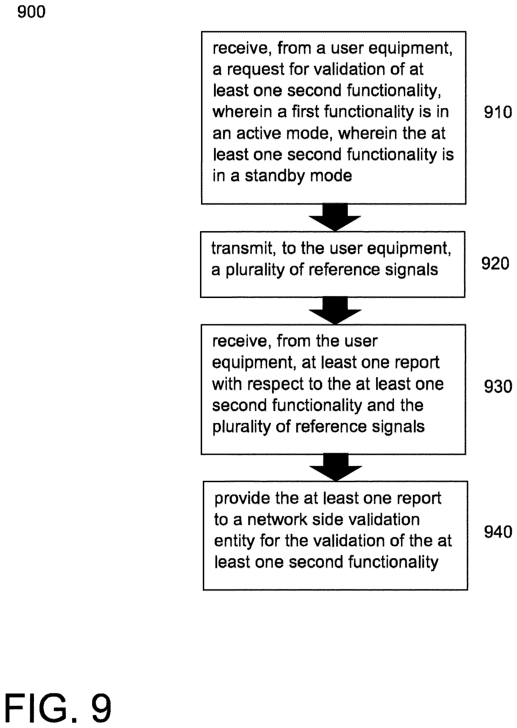

FIG. 9 illustrates the potential steps of an example method 900. The example method 900 may include: receiving, from a user equipment, a request for validation of at least one second functionality, wherein a first functionality is in an active mode, wherein the at least one second functionality is in a standby mode, 910; transmitting, to the user equipment, a plurality of reference signals, 920; receiving, from the user equipment, at least one report with respect to the at least one second functionality and the plurality of reference signals, 930; and providing the at least one report to a network side validation entity for the validation of the at least one second functionality, 940. The example method 900 may be performed, for example, with a base station, network entity, gNB, etc.

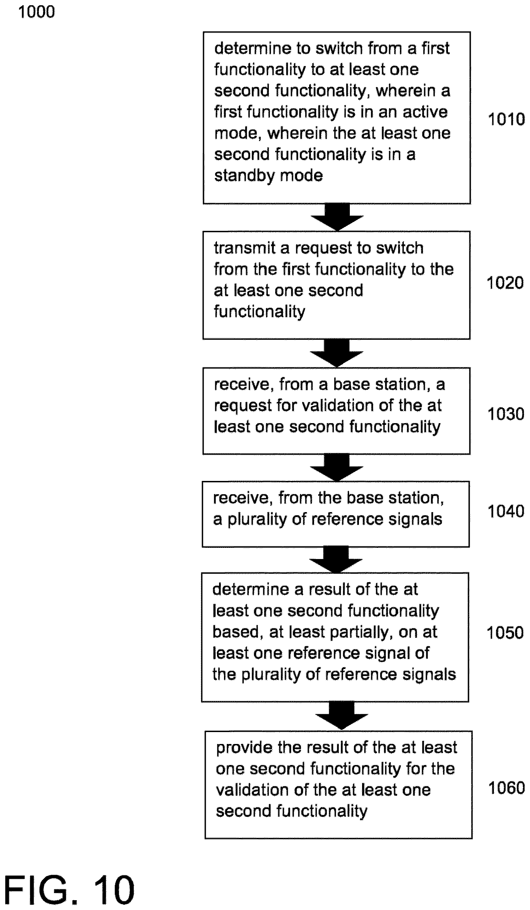

FIG. 10 illustrates the potential steps of an example method 1000. The example method 1000 may include: determining to switch from a first functionality to at least one second functionality, wherein the first functionality is in an active mode, wherein the at least one second functionality is in a standby mode, 1010; transmitting a request to switch from the first functionality to the at least one second functionality, 1020; receiving, from a base station, a request for validation of the at least one second functionality, 1030; receiving, from the base station, a plurality of reference signals, 1040; determining a result of the at least one second functionality based, at least partially, on at least one reference signal of the plurality of reference signals, 1050; and providing the result of the at least one second functionality for the validation of the at least one second functionality, 1060. The example method 1000 may be performed, for example, with a UE.

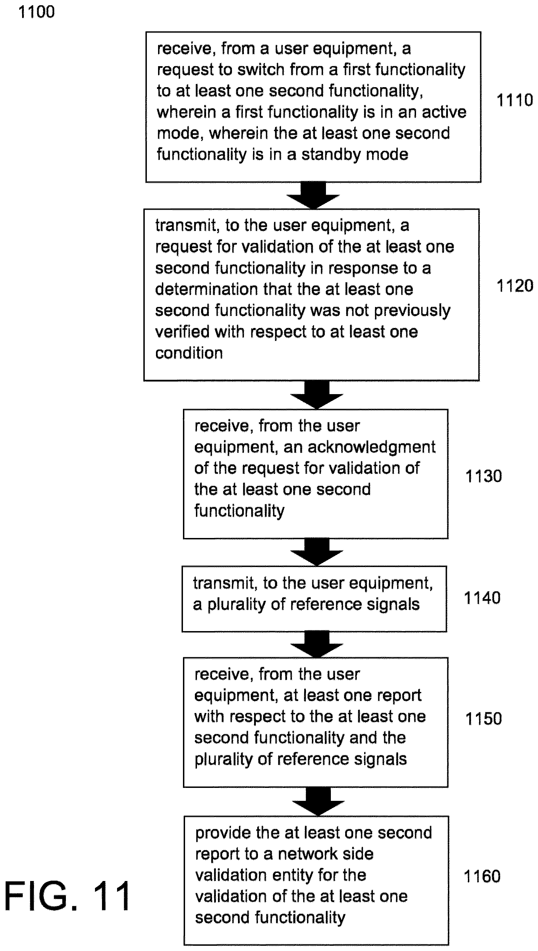

FIG. 11 illustrates the potential steps of an example method 1100. The example method 1100 may include: receiving, from a user equipment, a request to switch from a first functionality to at least one second functionality, wherein the first functionality is in an active mode, wherein the at least one second functionality is in a standby mode, 1110; transmitting, to the user equipment, a request for validation of the at least one second functionality in response to a determination that the at least one second functionality was not previously verified with respect to at least one condition, 1120; receiving, from the user equipment, an acknowledgment of the request for validation of the at least one second functionality, 1130; transmitting, to the user equipment, a plurality of reference signals, 1140; receiving, from the user equipment, at least one report with respect to the at least one second functionality and the plurality of reference signals, 1150; and providing the at least one second report to a network side validation entity for the validation of the at least one second functionality, 1160. The example method 1100 may be performed, for example, with a base station, network entity, gNB, etc.

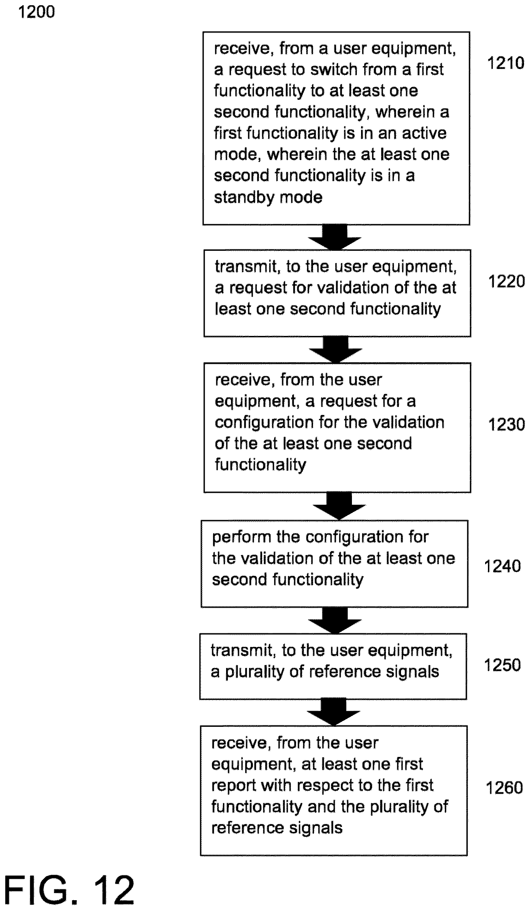

FIG. 12 illustrates the potential steps of an example method 1200. The example method 1200 may include: receiving, from a user equipment, a request to switch from a first functionality to at least one second functionality, wherein the first functionality is in an active mode, wherein the at least one second functionality is in a standby mode, 1210; transmitting, to the user equipment, a request for validation of the at least one second functionality, 1220; receiving, from the user equipment, a request for a configuration for the validation of the at least one second functionality, 1230; performing the configuration for the validation of the at least one second functionality, 1240; transmitting, to the user equipment, a plurality of reference signals, 1250; and receiving, from the user equipment, at least one first report with respect to the first functionality and the plurality of reference signals, 1260. The example method 1200 may be performed, for example, with a base station, network entity, gNB, etc.

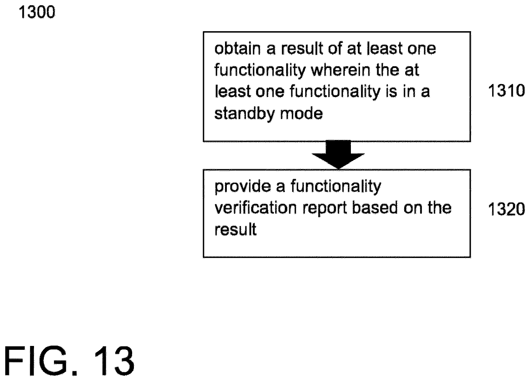

FIG. 13 illustrates the potential steps of an example method 1300. The example method 1300 may include: obtaining a result of at least one functionality wherein the at least one functionality is in a standby mode, 1310; and providing a functionality verification report based on the result, 1320. The example method 1300 may be performed, for example, with a validation entity or a verification entity, a UE side VE, a VE integrated with a UE, a network side VE, a VE integrated with a base station, a centralized VE, etc.

In accordance with one example embodiment, an apparatus may comprise: at least one processor; and at least one memory storing instructions that, when executed by the at least one processor, cause the apparatus at least to: determine that a validation of at least one second functionality has been triggered, wherein a first functionality may be in an active mode, wherein the at least one second functionality may be in a standby mode; transmit a request for the validation of the at least one second functionality; receive a plurality of reference signals; determine a result of the at least one second functionality based, at least partially, on at least one reference signal of the plurality of reference signals; and provide the result of the at least one second functionality for the validation of the at least one second functionality.

The example apparatus may be further configured to: determine a result of the first functionality based, at least partially, on at least one first reference signal of the plurality of reference signals; and provide the result of the first functionality for the validation of the at least one second functionality, wherein the result of the first functionality and the result of the at least one second functionality may be provided to a user equipment side validation entity for the validation of the at least one second functionality.

The example apparatus may be further configured to: provide the result of the first functionality to a base station.

The example apparatus may be further configured to: receive, from the user equipment side validation entity, a determination that the at least one second functionality is validated.

The example apparatus may be further configured to: provide a validation report to a base station based on a determination of whether the at least one second functionality is validated.

The result of the at least one second functionality may be provided to a base station for the validation of the at least one second functionality.

Providing the result of the at least one second functionality to the base station may comprise the example apparatus being further configured to: transmit, to the base station, compressed channel state information feedback, wherein the compressed channel state information feedback may comprise an indication that the result of the at least one second functionality are provided for validation.

Providing the result of the at least one second functionality to the base station may comprise the example apparatus being further configured to: transmit, to the base station, at least one of: beam prediction feedback, channel state information prediction feedback, predicted reference signal received power feedback, or predicted channel state information feedback.

The example apparatus may be further configured to: receive, from the base station, a validation report.

The example apparatus may be further configured to: determine a result of the first functionality based, at least partially, on at least one first reference signal of the plurality of reference signals; and provide the result of the first functionality for the validation of the at least one second functionality.

The example apparatus may be further configured to: receive an acknowledgement of the request for the validation of the at least one second functionality.

Determining that the validation of the at least one second functionality has been triggered may be in response to at least one of: an update with respect to the at least one second functionality, training with respect to the at least one second functionality, a change in a network configuration, a change in a user equipment configuration, a change in a propagation channel, or a handover.

The plurality of reference signals may comprise at least one validation specific reference signal.

The example apparatus may be further configured to: update a user equipment model repository or a user equipment functionality repository based, at least partially, on a result of the validation of the at least one second functionality.

The example apparatus may be further configured to: switch the at least one second functionality from the standby mode to the active mode based, at least partially, on an indication that the validation of the at least one second functionality is successful.

The request for the validation of the at least one second functionality may comprise one of: at least one applicability conditions for the at least one second functionality, at least one updated configuration, at least one input for the at least one second functionality, at least one output for the at least one second functionality, or at least one reference signal configuration.

In accordance with one aspect, an example method may be provided comprising: determining that a validation of at least one second functionality has been triggered, wherein a first functionality may be in an active mode, wherein the at least one second functionality may be in a standby mode; transmitting, with a user equipment, a request for the validation of the at least one second functionality; receiving a plurality of reference signals; determining a result of the at least one second functionality based, at least partially, on at least one reference signal of the plurality of reference signals; and providing the result of the at least one second functionality for the validation of the at least one second functionality.

The example method may further comprise: determining a result of the first functionality based, at least partially, on at least one first reference signal of the plurality of reference signals; and providing the result of the first functionality for the validation of the at least one second functionality, wherein the result of the first functionality and the result of the at least one second functionality may be provided to a user equipment side validation entity for the validation of the at least one second functionality.

The example method may further comprise: providing the result of the first functionality to a base station.

The example method may further comprise: receiving, from the user equipment side validation entity, a determination that the at least one second functionality is validated.

The example method may further comprise: providing a validation report to a base station based on a determination of whether the at least one second functionality is validated.

The result of the at least one second functionality may be provided to a base station for the validation of the at least one second functionality.

The providing of the result of the at least one second functionality to the base station may comprise: transmitting, to the base station, compressed channel state information feedback, wherein the compressed channel state information feedback may comprise an indication that the result of the at least one second functionality are provided for validation.

The providing of the result of the at least one second functionality to the base station may comprise: transmitting, to the base station, at least one of: beam prediction feedback, channel state information prediction feedback, predicted reference signal received power feedback, or predicted channel state information feedback.

The example method may further comprise: receiving, from the base station, a validation report.

The example method may further comprise: determining a result of the first functionality based, at least partially, on at least one first reference signal of the plurality of reference signals; and providing the result of the first functionality for the validation of the at least one second functionality.

The example method may further comprise: receiving an acknowledgement of the request for the validation of the at least one second functionality.

The determining that the validation of the at least one second functionality has been triggered may be in response to at least one of: an update with respect to the at least one second functionality, training with respect to the at least one second functionality, a change in a network configuration, a change in a user equipment configuration, a change in a propagation channel, or a handover.

The plurality of reference signals may comprise at least one validation specific reference signal.

The example method may further comprise: updating a user equipment model repository or a user equipment functionality repository based, at least partially, on a result of the validation of the at least one second functionality.

The example method may further comprise: switching the at least one second functionality from the standby mode to the active mode based, at least partially, on an indication that the validation of the at least one second functionality is successful.

The request for the validation of the at least one second functionality may comprise one of: at least one applicability conditions for the at least one second functionality, at least one updated configuration, at least one input for the at least one second functionality, at least one output for the at least one second functionality, or at least one reference signal configuration.

In accordance with one example embodiment, an apparatus may comprise: circuitry configured to perform: determining that a validation of at least one second functionality has been triggered, wherein a first functionality may be in an active mode, wherein the at least one second functionality may be in a standby mode; circuitry configured to perform: transmitting, with a user equipment, a request for the validation of the at least one second functionality; circuitry configured to perform: receiving a plurality of reference signals; circuitry configured to perform: determining a result of the at least one second functionality based, at least partially, on at least one reference signal of the plurality of reference signals; and circuitry configured to perform: providing the result of the at least one second functionality for the validation of the at least one second functionality.

In accordance with one example embodiment, an apparatus may comprise: processing circuitry; memory circuitry including computer program code, the memory circuitry and the computer program code configured to, with the processing circuitry, enable the apparatus to: determine that a validation of at least one second functionality has been triggered, wherein a first functionality may be in an active mode, wherein the at least one second functionality may be in a standby mode; transmit a request for the validation of the at least one second functionality; receive a plurality of reference signals; determine a result of the at least one second functionality based, at least partially, on at least one reference signal of the plurality of reference signals; and provide the result of the at least one second functionality for the validation of the at least one second functionality.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for performing: transmitting a request for the validation of the at least one second functionality; receiving a plurality of reference signals; determining a result of the at least one second functionality based, at least partially, on at least one reference signal of the plurality of reference signals; and providing the result of the at least one second functionality for the validation of the at least one second functionality.

The means may be further configured to perform: determining a result of the first functionality based, at least partially, on at least one first reference signal of the plurality of reference signals; and providing the result of the first functionality for the validation of the at least one second functionality, wherein the result of the first functionality and the result of the at least one second functionality may be provided to a user equipment side validation entity for the validation of the at least one second functionality.

The means may be further configured to perform: providing the result of the first functionality to a base station.

The means may be further configured to perform: receiving, from the user equipment side validation entity, a determination that the at least one second functionality is validated.

The means may be further configured to perform: providing a validation report to a base station based on a determination of whether the at least one second functionality is validated.

The result of the at least one second functionality may be provided to a base station for the validation of the at least one second functionality.

The means configured to perform providing the result of the at least one second functionality to the base station may comprise means configured to perform: transmitting, to the base station, compressed channel state information feedback, wherein the compressed channel state information feedback may comprise an indication that the result of the at least one second functionality are provided for validation.

The means configured to perform providing of the result of the at least one second functionality to the base station may comprise means configured to perform: transmitting, to the base station, at least one of: beam prediction feedback, channel state information prediction feedback, predicted reference signal received power feedback, or predicted channel state information feedback.

The means may be further configured to perform: receiving, from the base station, a validation report.

The means may be further configured to perform: determining a result of the first functionality based, at least partially, on at least one first reference signal of the plurality of reference signals; and providing the result of the first functionality for the validation of the at least one second functionality.

The means may be further configured to perform: receiving an acknowledgement of the request for the validation of the at least one second functionality.

Determining that the validation of the at least one second functionality has been triggered may be in response to at least one of: an update with respect to the at least one second functionality, training with respect to the at least one second functionality, a change in a network configuration, a change in a user equipment configuration, a change in a propagation channel, or a handover.

The plurality of reference signals may comprise at least one validation specific reference signal.

The means may be further configured to perform: updating a user equipment model repository or a user equipment functionality repository based, at least partially, on a result of the validation of the at least one second functionality.

The means may be further configured to perform: switching the at least one second functionality from the standby mode to the active mode based, at least partially, on an indication that the validation of the at least one second functionality is successful.

The request for the validation of the at least one second functionality may comprise one of: at least one applicability conditions for the at least one second functionality, at least one updated configuration, at least one input for the at least one second functionality, at least one output for the at least one second functionality, or at least one reference signal configuration.

A processor, memory, and/or example algorithms (which may be encoded as instructions, program, or code) may be provided as example means for providing or causing performance of operation.

In accordance with one example embodiment, a non-transitory computer-readable medium comprising instructions stored thereon which, when executed with at least one processor, cause the at least one processor to: cause transmitting of a request for the validation of the at least one second functionality; cause receiving of a plurality of reference signals; determine a result of the at least one second functionality based, at least partially, on at least one reference signal of the plurality of reference signals; and cause providing of the result of the at least one second functionality for the validation of the at least one second functionality.

In accordance with one example embodiment, a non-transitory computer-readable medium comprising program instructions stored thereon for performing at least the following: causing transmitting of a request for the validation of the at least one second functionality; causing receiving of a plurality of reference signals; determining a result of the at least one second functionality based, at least partially, on at least one reference signal of the plurality of reference signals; and causing providing of the result of the at least one second functionality for the validation of the at least one second functionality.

In accordance with another example embodiment, a non-transitory program storage device readable by a machine may be provided, tangibly embodying instructions executable by the machine for performing operations, the operations comprising: causing transmitting of a request for the validation of the at least one second functionality; causing receiving of a plurality of reference signals; determining a result of the at least one second functionality based, at least partially, on at least one reference signal of the plurality of reference signals; and causing providing of the result of the at least one second functionality for the validation of the at least one second functionality.

In accordance with another example embodiment, a non-transitory computer-readable medium comprising instructions that, when executed by an apparatus, cause the apparatus to perform at least the following: causing transmitting of a request for the validation of the at least one second functionality; causing receiving of a plurality of reference signals; determining a result of the at least one second functionality based, at least partially, on at least one reference signal of the plurality of reference signals; and causing providing of the result of the at least one second functionality for the validation of the at least one second functionality.

A computer implemented system comprising: at least one processor and at least one non-transitory memory storing instructions that, when executed by the at least one processor, cause the system at least to perform: causing transmitting of a request for the validation of the at least one second functionality; causing receiving of a plurality of reference signals; determining a result of the at least one second functionality based, at least partially, on at least one reference signal of the plurality of reference signals; and causing providing of the result of the at least one second functionality for the validation of the at least one second functionality.

A computer implemented system comprising: means for causing transmitting of a request for the validation of the at least one second functionality; means for causing receiving of a plurality of reference signals; means for determining a result of the at least one second functionality based, at least partially, on at least one reference signal of the plurality of reference signals; and means for causing providing of the result of the at least one second functionality for the validation of the at least one second functionality.

In accordance with one example embodiment, an apparatus may comprise: at least one processor; and at least one memory storing instructions that, when executed by the at least one processor, cause the apparatus at least to: receive, from a user equipment, a request for validation of at least one second functionality, wherein a first functionality may be in an active mode, wherein the at least one second functionality may be in a standby mode; transmit, to the user equipment, a plurality of reference signals; receive, from the user equipment, at least one report with respect to the at least one second functionality and the plurality of reference signals; and provide the at least one report to a network side validation entity for the validation of the at least one second functionality.

The at least one report may comprise compressed channel state information feedback, wherein the compressed channel state information feedback may comprise an indication that the result of the at least one second functionality is provided for validation.

The at least one report may comprise at least one of: beam prediction feedback, channel state information prediction feedback, predicted reference signal received power feedback, or predicted channel state information feedback.

The example apparatus may be further configured to: provide, to the user equipment, a validation report.

The example apparatus may be further configured to: transmit, to the user equipment, an acknowledgment of the request.

The plurality of reference signals may comprise at least one validation specific reference signal.

The example apparatus may be further configured to: update a network model repository or a network functionality repository based, at least partially, on a result of the validation of the at least one second functionality.

The example apparatus may be further configured to: switch the at least one second functionality from the standby mode to the active mode based, at least partially, on an indication that the validation of the second functionality is successful.

The request for the validation of the at least one second functionality may comprise one of: at least one applicability conditions for the at least one second functionality, at least one updated configuration, at least one input for the at least one second functionality, at least one output for the at least one second functionality, or at least one reference signal configuration.

The example apparatus may be further configured to: determine whether the validation of the at least one second functionality is supported.

The example apparatus may be further configured to: apply one or more parameters for the validation of the at least one second functionality.

The example apparatus may be further configured to: receive, from a network model repository or a network functionality repository, at least one additional network functionality.

The example apparatus may be further configured to: receive, from the user equipment, at least one first report with respect to the first functionality and the plurality of reference signals.

The at least one first report may comprise an indication that the report is configured to be used for the validation of the at least one second functionality.

The example apparatus may be further configured to: provide the at least one first report to the network side validation entity for the validation of the at least one second functionality.

The at least one first report may comprise an indication that the report is configured to be used for network operation.

In accordance with one aspect, an example method may be provided comprising: receiving, with a base station from a user equipment, a request for validation of at least one second functionality, wherein a first functionality may be in an active mode, wherein the at least one second functionality may be in a standby mode; transmitting, to the user equipment, a plurality of reference signals; receiving, from the user equipment, at least one report with respect to the at least one second functionality and the plurality of reference signals; and providing the at least one report to a network side validation entity for the validation of the at least one second functionality.

The at least one report may comprise compressed channel state information feedback, wherein the compressed channel state information feedback may comprise an indication that the result of the at least one second functionality is provided for validation.

The at least one report may comprise at least one of: beam prediction feedback, channel state information prediction feedback, predicted reference signal received power feedback, or predicted channel state information feedback.

The example method may further comprise: providing, to the user equipment, a validation report.

The example method may further comprise: transmitting, to the user equipment, an acknowledgment of the request.

The plurality of reference signals may comprise at least one validation specific reference signal.

The example method may further comprise: updating a network model repository or a network functionality repository based, at least partially, on a result of the validation of the at least one second functionality.

The example method may further comprise: switching the at least one second functionality from the standby mode to the active mode based, at least partially, on an indication that the validation of the second functionality is successful.

The request for the validation of the at least one second functionality may comprise one of: at least one applicability conditions for the at least one second functionality, at least one updated configuration, at least one input for the at least one second functionality, at least one output for the at least one second functionality, or at least one reference signal configuration.

The example method may further comprise: determining whether the validation of the at least one second functionality is supported.

The example method may further comprise: applying one or more parameters for the validation of the at least one second functionality.

The example method may further comprise: receiving, from a network model repository or a network functionality repository, at least one additional network functionality.

The example method may further comprise: receiving, from the user equipment, at least one first report with respect to the first functionality and the plurality of reference signals.

The at least one first report may comprise an indication that the report is configured to be used for the validation of the at least one second functionality.

The example method may further comprise: providing the at least one first report to the network side validation entity for the validation of the at least one second functionality.

The at least one first report may comprise an indication that the report is configured to be used for network operation.

In accordance with one example embodiment, an apparatus may comprise: circuitry configured to perform: receiving, from a user equipment, a request for validation of at least one second functionality, wherein a first functionality may be in an active mode, wherein the at least one second functionality may be in a standby mode; circuitry configured to perform: transmitting, to the user equipment, a plurality of reference signals; circuitry configured to perform: receiving, from the user equipment, at least one report with respect to the at least one second functionality and the plurality of reference signals; and circuitry configured to perform: providing the at least one report to a network side validation entity for the validation of the at least one second functionality.

In accordance with one example embodiment, an apparatus may comprise: processing circuitry; memory circuitry including computer program code, the memory circuitry and the computer program code configured to, with the processing circuitry, enable the apparatus to: receive, from a user equipment, a request for validation of at least one second functionality, wherein a first functionality may be in an active mode, wherein the at least one second functionality may be in a standby mode; transmit, to the user equipment, a plurality of reference signals; receive, from the user equipment, at least one report with respect to the at least one second functionality and the plurality of reference signals; and provide the at least one report to a network side validation entity for the validation of the at least one second functionality.

In accordance with one example embodiment, an apparatus may comprise means for performing: receiving, from a user equipment, a request for validation of at least one second functionality, wherein a first functionality may be in an active mode, wherein the at least one second functionality may be in a standby mode; transmitting, to the user equipment, a plurality of reference signals; receiving, from the user equipment, at least one report with respect to the at least one second functionality and the plurality of reference signals; and providing the at least one report to a network side validation entity for the validation of the at least one second functionality.

The at least one report may comprise compressed channel state information feedback, wherein the compressed channel state information feedback may comprise an indication that the result of the at least one second functionality is provided for validation.

The at least one report may comprise at least one of: beam prediction feedback, channel state information prediction feedback, predicted reference signal received power feedback, or predicted channel state information feedback.

The means may be further configured to perform: providing, to the user equipment, a validation report.

The means may be further configured to perform: transmitting, to the user equipment, an acknowledgment of the request.

The plurality of reference signals may comprise at least one validation specific reference signal.

The means may be further configured to perform: updating a network model repository or a network functionality repository based, at least partially, on a result of the validation of the at least one second functionality.

The means may be further configured to perform: switching the at least one second functionality from the standby mode to the active mode based, at least partially, on an indication that the validation of the second functionality is successful.

The request for the validation of the at least one second functionality may comprise one of: at least one applicability conditions for the at least one second functionality, at least one updated configuration, at least one input for the at least one second functionality, at least one output for the at least one second functionality, or at least one reference signal configuration.

The means may be further configured to perform: determining whether the validation of the at least one second functionality is supported.

The means may be further configured to perform: applying one or more parameters for the validation of the at least one second functionality.

The means may be further configured to perform: receiving, from a network model repository or a network functionality repository, at least one additional network functionality.

The means may be further configured to perform: receiving, from the user equipment, at least one first report with respect to the first functionality and the plurality of reference signals.

The at least one first report may comprise an indication that the report is configured to be used for the validation of the at least one second functionality.

The means may be further configured to perform: providing the at least one first report to the network side validation entity for the validation of the at least one second functionality.

The at least one first report may comprise an indication that the report is configured to be used for network operation.

In accordance with one example embodiment, a non-transitory computer-readable medium comprising instructions stored thereon which, when executed with at least one processor, cause the at least one processor to: cause receiving, from a user equipment, of a request for validation of at least one second functionality, wherein a first functionality may be in an active mode, wherein the at least one second functionality may be in a standby mode; cause transmitting, to the user equipment, of a plurality of reference signals; cause receiving, from the user equipment, of at least one report with respect to the at least one second functionality and the plurality of reference signals; and cause providing of the at least one report to a network side validation entity for the validation of the at least one second functionality.

In accordance with one example embodiment, a non-transitory computer-readable medium comprising program instructions stored thereon for performing at least the following: causing receiving, from a user equipment, of a request for validation of at least one second functionality, wherein a first functionality may be in an active mode, wherein the at least one second functionality may be in a standby mode; causing transmitting, to the user equipment, of a plurality of reference signals; causing receiving, from the user equipment, of at least one report with respect to the at least one second functionality and the plurality of reference signals; and causing providing of the at least one report to a network side validation entity for the validation of the at least one second functionality.

In accordance with another example embodiment, a non-transitory program storage device readable by a machine may be provided, tangibly embodying instructions executable by the machine for performing operations, the operations comprising: causing receiving, from a user equipment, of a request for validation of at least one second functionality, wherein a first functionality may be in an active mode, wherein the at least one second functionality may be in a standby mode; causing transmitting, to the user equipment, of a plurality of reference signals; causing receiving, from the user equipment, of at least one report with respect to the at least one second functionality and the plurality of reference signals; and causing providing of the at least one report to a network side validation entity for the validation of the at least one second functionality.

In accordance with another example embodiment, a non-transitory computer-readable medium comprising instructions that, when executed by an apparatus, cause the apparatus to perform at least the following: causing receiving, from a user equipment, of a request for validation of at least one second functionality, wherein a first functionality may be in an active mode, wherein the at least one second functionality may be in a standby mode; causing transmitting, to the user equipment, of a plurality of reference signals; causing receiving, from the user equipment, of at least one report with respect to the at least one second functionality and the plurality of reference signals; and causing providing of the at least one report to a network side validation entity for the validation of the at least one second functionality.

A computer implemented system comprising: at least one processor and at least one non-transitory memory storing instructions that, when executed by the at least one processor, cause the system at least to perform: causing receiving, from a user equipment, of a request for validation of at least one second functionality, wherein a first functionality may be in an active mode, wherein the at least one second functionality may be in a standby mode; causing transmitting, to the user equipment, of a plurality of reference signals; causing receiving, from the user equipment, of at least one report with respect to the at least one second functionality and the plurality of reference signals; and causing providing of the at least one report to a network side validation entity for the validation of the at least one second functionality.

A computer implemented system comprising: means for causing receiving, from a user equipment, of a request for validation of at least one second functionality, wherein a first functionality may be in an active mode, wherein the at least one second functionality may be in a standby mode; means for causing transmitting, to the user equipment, of a plurality of reference signals; means for causing receiving, from the user equipment, of at least one report with respect to the at least one second functionality and the plurality of reference signals; and means for causing providing of the at least one report to a network side validation entity for the validation of the at least one second functionality.

In accordance with one example embodiment, an apparatus may comprise: at least one processor; and at least one memory storing instructions that, when executed by the at least one processor, cause the apparatus at least to: determine to switch from a first functionality to at least one second functionality, wherein the first functionality may be in an active mode, wherein the at least one second functionality may be in a standby mode; transmit a request to switch from the first functionality to the at least one second functionality; receive, from a base station, a request for validation of the at least one second functionality; receive, from the base station, a plurality of reference signals; determine a result of the at least one second functionality based, at least partially, on at least one reference signal of the plurality of reference signals; and provide the result of the at least one second functionality for the validation of the at least one second functionality.

The example apparatus may be further configured to: determine a result of the first functionality based, at least partially, on at least one first reference signal of the plurality of reference signals; and provide the result of the first functionality for the validation of the at least one second functionality, wherein the result of the first functionality and the result of the at least one second functionality may be provided to a user equipment validation entity.

The example apparatus may be further configured to: transmit, to the base station, a request for a configuration for validation of the at least one second functionality.

The example apparatus may be further configured to: provide, to the base station, the result of the first functionality.

The example apparatus may be further configured to: provide a validation report to a base station based on a determination of whether the at least one second functionality is validated.

The result of the at least one second functionality may be provided to the base station.

Providing the result of the at least one second functionality to the base station may comprise the example apparatus being further configured to: transmit, to the base station, compressed channel state information feedback, wherein the compressed channel state information feedback may comprise an indication that the result of the at least one second functionality is provided for validation.

Providing the result of the at least one second functionality to the base station may comprise the example apparatus being further configured to: transmit, to the base station, at least one of: beam prediction feedback, channel state information prediction feedback, predicted reference signal received power feedback, or predicted channel state information feedback.

The example apparatus may be further configured to: receive, from the base station, a validation report.

The example apparatus may be further configured to: determine a result of the first functionality based, at least partially, on at least one first reference signal of the plurality of reference signals; and provide the result of the first functionality for the validation of the at least one second functionality.

The plurality of reference signals may comprise at least one validation specific reference signal.

The example apparatus may be further configured to: update a user equipment model repository or a user equipment functionality repository based, at least partially, on a result of the validation of the at least one second functionality.

The example apparatus may be further configured to: switch the at least one second functionality from the standby mode to the active mode based, at least partially, on an indication that the validation of the at least one second functionality is successful.

In accordance with one aspect, an example method may be provided comprising: determining, with a user equipment, to switch from a first functionality to at least one second functionality, wherein the first functionality may be in an active mode, wherein the at least one second functionality may be in a standby mode; transmitting a request to switch from the first functionality to the at least one second functionality; receiving, from a base station, a request for validation of the at least one second functionality; receiving, from the base station, a plurality of reference signals; determining a result of the at least one second functionality based, at least partially, on at least one reference signal of the plurality of reference signals; and providing the result of the at least one second functionality for the validation of the at least one second functionality.

The example method may further comprise: determining a result of the first functionality based, at least partially, on at least one first reference signal of the plurality of reference signals; and providing the result of the first functionality for the validation of the at least one second functionality, wherein the result of the first functionality and the result of the at least one second functionality are provided to a user equipment validation entity.

The example method may further comprise: transmitting, to the base station, a request for a configuration for validation of the at least one second functionality.

The example method may further comprise: providing, to the base station, the result of the first functionality.

The example method may further comprise: providing a validation report to a base station based on a determination of whether the at least one second functionality is validated.

The result of the at least one second functionality may be provided to the base station.

The providing of the result of the at least one second functionality to the base station may comprise: transmitting, to the base station, compressed channel state information feedback, wherein the compressed channel state information feedback may comprise an indication that the result of the at least one second functionality is provided for validation.

The providing of the result of the at least one second functionality to the base station may comprise: transmitting, to the base station, at least one of: beam prediction feedback, channel state information prediction feedback, predicted reference signal received power feedback, or predicted channel state information feedback.

The example method may further comprise: receiving, from the base station, a validation report.

The example method may further comprise: determining a result of the first functionality based, at least partially, on at least one first reference signal of the plurality of reference signals; and providing the result of the first functionality for the validation of the at least one second functionality.

The plurality of reference signals may comprise at least one validation specific reference signal.

The example method may further comprise: updating a user equipment model repository or a user equipment functionality repository based, at least partially, on a result of the validation of the at least one second functionality.

The example method may further comprise: switching the at least one second functionality from the standby mode to the active mode based, at least partially, on an indication that the validation of the at least one second functionality is successful.

In accordance with one example embodiment, an apparatus may comprise: circuitry configured to perform: determining to switch from a first functionality to at least one second functionality, wherein the first functionality may be in an active mode, wherein the at least one second functionality may be in a standby mode; circuitry configured to perform: transmitting a request to switch from the first functionality to the at least one second functionality; circuitry configured to perform: receiving, from a base station, a request for validation of the at least one second functionality; circuitry configured to perform: receiving, from the base station, a plurality of reference signals; circuitry configured to perform: determining a result of the at least one second functionality based, at least partially, on at least one reference signal of the plurality of reference signals; and circuitry configured to perform: providing the result of the at least one second functionality for the validation of the at least one second functionality.

In accordance with one example embodiment, an apparatus may comprise: processing circuitry; memory circuitry including computer program code, the memory circuitry and the computer program code configured to, with the processing circuitry, enable the apparatus to: determine to switch from a first functionality to at least one second functionality, wherein the first functionality may be in an active mode, wherein the at least one second functionality may be in a standby mode; transmit a request to switch from the first functionality to the at least one second functionality; receive, from a base station, a request for validation of the at least one second functionality; receive, from the base station, a plurality of reference signals; determine a result of the at least one second functionality based, at least partially, on at least one reference signal of the plurality of reference signals; and provide the result of the at least one second functionality for the validation of the at least one second functionality.

In accordance with one example embodiment, an apparatus may comprise means for performing: determining to switch from a first functionality to at least one second functionality, wherein the first functionality may be in an active mode, wherein the at least one second functionality may be in a standby mode; transmitting a request to switch from the first functionality to the at least one second functionality; receiving, from a base station, a request for validation of the at least one second functionality; receiving, from the base station, a plurality of reference signals; determining a result of the at least one second functionality based, at least partially, on at least one reference signal of the plurality of reference signals; and providing the result of the at least one second functionality for the validation of the at least one second functionality.

The means may be further configured to perform: determining a result of the first functionality based, at least partially, on at least one first reference signal of the plurality of reference signals; and providing the result of the first functionality for the validation of the at least one second functionality, wherein the result of the first functionality and the result of the at least one second functionality may be provided to a user equipment validation entity.

The means may be further configured to perform: transmitting, to the base station, a request for a configuration for validation of the at least one second functionality.

The means may be further configured to perform: providing, to the base station, the result of the first functionality.

The means may be further configured to perform: providing a validation report to a base station based on a determination of whether the at least one second functionality is validated.

The result of the at least one second functionality may be provided to the base station.

The means configured to perform providing the result of the at least one second functionality to the base station may comprise means configured to perform: transmitting, to the base station, compressed channel state information feedback, wherein the compressed channel state information feedback may comprise an indication that the result of the at least one second functionality is provided for validation.

The means configured to perform providing the result of the at least one second functionality to the base station may comprise means configured to perform: transmitting, to the base station, at least one of: beam prediction feedback, channel state information prediction feedback, predicted reference signal received power feedback, or predicted channel state information feedback.

The means may be further configured to perform: receiving, from the base station, a validation report.

The means may be further configured to perform: determining a result of the first functionality based, at least partially, on at least one first reference signal of the plurality of reference signals; and providing the result of the first functionality for the validation of the at least one second functionality.

The plurality of reference signals may comprise at least one validation specific reference signal.

The means may be further configured to perform: updating a user equipment model repository or a user equipment functionality repository based, at least partially, on a result of the validation of the at least one second functionality.

The means may be further configured to perform: switching the at least one second functionality from the standby mode to the active mode based, at least partially, on an indication that the validation of the at least one second functionality is successful.

In accordance with one example embodiment, a non-transitory computer-readable medium comprising instructions stored thereon which, when executed with at least one processor, cause the at least one processor to: determine to switch from a first functionality to at least one second functionality, wherein the first functionality may be in an active mode, wherein the at least one second functionality may be in a standby mode; cause transmitting of a request to switch from the first functionality to the at least one second functionality; cause receiving, from a base station, of a request for validation of the at least one second functionality; cause receiving, from the base station, of a plurality of reference signals; determine a result of the at least one second functionality based, at least partially, on at least one reference signal of the plurality of reference signals; and cause providing of the result of the at least one second functionality for the validation of the at least one second functionality.

In accordance with one example embodiment, a non-transitory computer-readable medium comprising program instructions stored thereon for performing at least the following: determining to switch from a first functionality to at least one second functionality, wherein the first functionality may be in an active mode, wherein the at least one second functionality may be in a standby mode; causing transmitting of a request to switch from the first functionality to the at least one second functionality; causing receiving, from a base station, of a request for validation of the at least one second functionality; causing receiving, from the base station, of a plurality of reference signals; determining a result of the at least one second functionality based, at least partially, on at least one reference signal of the plurality of reference signals; and causing providing of the result of the at least one second functionality for the validation of the at least one second functionality.

In accordance with another example embodiment, a non-transitory program storage device readable by a machine may be provided, tangibly embodying instructions executable by the machine for performing operations, the operations comprising: determining to switch from a first functionality to at least one second functionality, wherein the first functionality may be in an active mode, wherein the at least one second functionality may be in a standby mode; causing transmitting of a request to switch from the first functionality to the at least one second functionality; causing receiving, from a base station, of a request for validation of the at least one second functionality; causing receiving, from the base station, of a plurality of reference signals; determining a result of the at least one second functionality based, at least partially, on at least one reference signal of the plurality of reference signals; and causing providing of the result of the at least one second functionality for the validation of the at least one second functionality.

In accordance with another example embodiment, a non-transitory computer-readable medium comprising instructions that, when executed by an apparatus, cause the apparatus to perform at least the following: determining to switch from a first functionality to at least one second functionality, wherein the first functionality may be in an active mode, wherein the at least one second functionality may be in a standby mode; causing transmitting of a request to switch from the first functionality to the at least one second functionality; causing receiving, from a base station, of a request for validation of the at least one second functionality; causing receiving, from the base station, of a plurality of reference signals; determining a result of the at least one second functionality based, at least partially, on at least one reference signal of the plurality of reference signals; and causing providing of the result of the at least one second functionality for the validation of the at least one second functionality.

A computer implemented system comprising: at least one processor and at least one non-transitory memory storing instructions that, when executed by the at least one processor, cause the system at least to perform: determining to switch from a first functionality to at least one second functionality, wherein the first functionality may be in an active mode, wherein the at least one second functionality may be in a standby mode; causing transmitting of a request to switch from the first functionality to the at least one second functionality; causing receiving, from a base station, of a request for validation of the at least one second functionality; causing receiving, from the base station, of a plurality of reference signals; determining a result of the at least one second functionality based, at least partially, on at least one reference signal of the plurality of reference signals; and causing providing of the result of the at least one second functionality for the validation of the at least one second functionality.

A computer implemented system comprising: means for determining to switch from a first functionality to at least one second functionality, wherein the first functionality may be in an active mode, wherein the at least one second functionality may be in a standby mode; means for causing transmitting of a request to switch from the first functionality to the at least one second functionality; means for causing receiving, from a base station, of a request for validation of the at least one second functionality; means for causing receiving, from the base station, of a plurality of reference signals; means for determining a result of the at least one second functionality based, at least partially, on at least one reference signal of the plurality of reference signals; and means for causing providing of the result of the at least one second functionality for the validation of the at least one second functionality.

In accordance with one example embodiment, an apparatus may comprise: at least one processor; and at least one memory storing instructions that, when executed by the at least one processor, cause the apparatus at least to: receive, from a user equipment, a request to switch from a first functionality to at least one second functionality, wherein the first functionality may be in an active mode, wherein the at least one second functionality may be in a standby mode; transmit, to the user equipment, a request for validation of the at least one second functionality in response to a determination that the at least one second functionality was not previously validated with respect to at least one condition; receive, from the user equipment, an acknowledgment of the request for validation of the at least one second functionality; transmit, to the user equipment, a plurality of reference signals; receive, from the user equipment, at least one report with respect to the at least one second functionality and the plurality of reference signals; and provide the at least one second report to a network side validation entity for the validation of the at least one second functionality.

The at least one report may comprise compressed channel state information feedback, wherein the compressed channel state information feedback may comprise an indication that the result of the at least one second functionality is provided for validation.

The at least one report may comprise at least one of: beam prediction feedback, channel state information prediction feedback, predicted reference signal received power feedback, or predicted channel state information feedback.

The example apparatus may be further configured to: provide, to the user equipment, a validation report.

The plurality of reference signals may comprise at least one validation specific reference signal.

The example apparatus may be further configured to: update a network model repository or a network functionality repository based, at least partially, on a result of the validation of the at least one second functionality.

The example apparatus may be further configured to: switch the at least one second functionality from the standby mode to the active mode based, at least partially, on an indication that the validation of the at least one second functionality is successful.

The example apparatus may be further configured to: receive, from a network model repository or a network functionality repository, at least one additional network functionality.

The example apparatus may be further configured to: determine whether the at least one second functionality was previously validated with respect to the at least one condition.

The request for validation of the at least one second functionality may comprise a validation configuration.

The at least one condition may comprise one of: a network functionality, or a network model.

The example apparatus may be further configured to: receive, from the user equipment, at least one first report with respect to the first functionality and the plurality of reference signals.

The at least one first report may comprise an indication that the report is configured to be used for the validation of the at least one second functionality.

The example apparatus may be further configured to: provide the at least one first report to the network side validation entity for the validation of the at least one second functionality.

The at least one first report may comprise an indication that the report is configured to be used for network operation.

In accordance with one aspect, an example method may be provided comprising: receiving, with a base station from a user equipment, a request to switch from a first functionality to at least one second functionality, wherein a first functionality may be in an active mode, wherein the at least one second functionality may be in a standby mode; transmitting, to the user equipment, a request for validation of the at least one second functionality in response to a determination that the at least one second functionality was not previously validated with respect to at least one condition; receiving, from the user equipment, an acknowledgment of the request for validation of the at least one second functionality; transmitting, to the user equipment, a plurality of reference signals; receiving, from the user equipment, at least one report with respect to the at least one second functionality and the plurality of reference signals; and providing the at least one second report to a network side validation entity for the validation of the at least one second functionality.

The at least one report may comprise compressed channel state information feedback, wherein the compressed channel state information feedback may comprise an indication that the result of the at least one second functionality is provided for validation.

The at least one report may comprise at least one of: beam prediction feedback, channel state information prediction feedback, predicted reference signal received power feedback, or predicted channel state information feedback.

The example method may further comprise: provide, to the user equipment, a validation report.

The plurality of reference signals may comprise at least one validation specific reference signal.

The example method may further comprise: updating a network model repository or a network functionality repository based, at least partially, on a result of the validation of the at least one second functionality.

The example method may further comprise: switching the at least one second functionality from the standby mode to the active mode based, at least partially, on an indication that the validation of the at least one second functionality is successful.

The example method may further comprise: receiving, from a network model repository or a network functionality repository, at least one additional network functionality.

The example method may further comprise: determining whether the at least one second functionality was previously validated with respect to the at least one condition.

The request for validation of the at least one second functionality may comprise a validation configuration.

The at least one condition may comprise one of: a network functionality, or a network model.

The example method may further comprise: receiving, from the user equipment, at least one first report with respect to the first functionality and the plurality of reference signals.

The at least one first report may comprise an indication that the report is configured to be used for the validation of the at least one second functionality.

The example method may further comprise: providing the at least one first report to the network side validation entity for the validation of the at least one second functionality.

The at least one first report may comprise an indication that the report is configured to be used for network operation.

In accordance with one example embodiment, an apparatus may comprise: circuitry configured to perform: receiving, from a user equipment, a request to switch from a first functionality to at least one second functionality, wherein a first functionality may be in an active mode, wherein the at least one second functionality may be in a standby mode; circuitry configured to perform: transmitting, to the user equipment, a request for validation of the at least one second functionality in response to a determination that the at least one second functionality was not previously validated with respect to at least one condition; circuitry configured to perform: receiving, from the user equipment, an acknowledgment of the request for validation of the at least one second functionality; circuitry configured to perform: transmitting, to the user equipment, a plurality of reference signals; circuitry configured to perform: receiving, from the user equipment, at least one report with respect to the at least one second functionality and the plurality of reference signals; and circuitry configured to perform: providing the at least one second report to a network side validation entity for the validation of the at least one second functionality.

In accordance with one example embodiment, an apparatus may comprise: processing circuitry; memory circuitry including computer program code, the memory circuitry and the computer program code configured to, with the processing circuitry, enable the apparatus to: receive, from a user equipment, a request to switch from a first functionality to at least one second functionality, wherein the first functionality may be in an active mode, wherein the at least one second functionality may be in a standby mode; transmit, to the user equipment, a request for validation of the at least one second functionality in response to a determination that the at least one second functionality was not previously validated with respect to at least one condition; receive, from the user equipment, an acknowledgment of the request for validation of the at least one second functionality; transmit, to the user equipment, a plurality of reference signals; receive, from the user equipment, at least one report with respect to the at least one second functionality and the plurality of reference signals; and provide the at least one second report to a network side validation entity for the validation of the at least one second functionality.

In accordance with one example embodiment, an apparatus may comprise means for performing: receiving, from a user equipment, a request to switch from a first functionality to at least one second functionality, wherein the first functionality may be in an active mode, wherein the at least one second functionality may be in a standby mode; transmitting, to the user equipment, a request for validation of the at least one second functionality in response to a determination that the at least one second functionality was not previously validated with respect to at least one condition; receiving, from the user equipment, an acknowledgment of the request for validation of the at least one second functionality; transmitting, to the user equipment, a plurality of reference signals; receiving, from the user equipment, at least one report with respect to the at least one second functionality and the plurality of reference signals; and providing the at least one second report to a network side validation entity for the validation of the at least one second functionality.

The at least one report may comprise compressed channel state information feedback, wherein the compressed channel state information feedback may comprise an indication that the result of the at least one second functionality is provided for validation.

The at least one report may comprise at least one of: beam prediction feedback, channel state information prediction feedback, predicted reference signal received power feedback, or predicted channel state information feedback.

The means may be further configured to perform: providing, to the user equipment, a validation report.

The plurality of reference signals may comprise at least one validation specific reference signal.

The means may be further configured to perform: updating a network model repository or a network functionality repository based, at least partially, on a result of the validation of the at least one second functionality.

The means may be further configured to perform: switching the at least one second functionality from the standby mode to the active mode based, at least partially, on an indication that the validation of the at least one second functionality is successful.

The means may be further configured to perform: receiving, from a network model repository or a network functionality repository, at least one additional network functionality.

The means may be further configured to perform: determining whether the at least one second functionality was previously validated with respect to the at least one condition.

The request for validation of the at least one second functionality may comprise a validation configuration.

The at least one condition may comprise one of: a network functionality, or a network model.

The means may be further configured to perform: receiving, from the user equipment, at least one first report with respect to the first functionality and the plurality of reference signals.

The at least one first report may comprise an indication that the report is configured to be used for the validation of the at least one second functionality.

The means may be further configured to perform: providing the at least one first report to the network side validation entity for the validation of the at least one second functionality.

The at least one first report may comprise an indication that the report is configured to be used for network operation.

In accordance with one example embodiment, a non-transitory computer-readable medium comprising instructions stored thereon which, when executed with at least one processor, cause the at least one processor to: cause receiving, from a user equipment, of a request to switch from a first functionality to at least one second functionality, wherein the first functionality may be in an active mode, wherein the at least one second functionality may be in a standby mode; cause transmitting, to the user equipment, of a request for validation of the at least one second functionality in response to a determination that the at least one second functionality was not previously validated with respect to at least one condition; cause receiving, from the user equipment, of an acknowledgment of the request for validation of the at least one second functionality; cause transmitting, to the user equipment, of a plurality of reference signals; cause receiving, from the user equipment, of at least one report with respect to the at least one second functionality and the plurality of reference signals; and cause providing of the at least one second report to a network side validation entity for the validation of the at least one second functionality.

In accordance with one example embodiment, a non-transitory computer-readable medium comprising program instructions stored thereon for performing at least the following: causing receiving, from a user equipment, of a request to switch from a first functionality to at least one second functionality, wherein the first functionality may be in an active mode, wherein the at least one second functionality may be in a standby mode; causing transmitting, to the user equipment, of a request for validation of the at least one second functionality in response to a determination that the at least one second functionality was not previously validated with respect to at least one condition; causing receiving, from the user equipment, of an acknowledgment of the request for validation of the at least one second functionality; causing transmitting, to the user equipment, of a plurality of reference signals; causing receiving, from the user equipment, of at least one report with respect to the at least one second functionality and the plurality of reference signals; and causing providing of the at least one second report to a network side validation entity for the validation of the at least one second functionality.

In accordance with another example embodiment, a non-transitory program storage device readable by a machine may be provided, tangibly embodying instructions executable by the machine for performing operations, the operations comprising: causing receiving, from a user equipment, of a request to switch from a first functionality to at least one second functionality, wherein the first functionality may be in an active mode, wherein the at least one second functionality may be in a standby mode; causing transmitting, to the user equipment, of a request for validation of the at least one second functionality in response to a determination that the at least one second functionality was not previously validated with respect to at least one condition; causing receiving, from the user equipment, of an acknowledgment of the request for validation of the at least one second functionality; causing transmitting, to the user equipment, of a plurality of reference signals; causing receiving, from the user equipment, of at least one report with respect to the at least one second functionality and the plurality of reference signals; and causing providing of the at least one second report to a network side validation entity for the validation of the at least one second functionality.

In accordance with another example embodiment, a non-transitory computer-readable medium comprising instructions that, when executed by an apparatus, cause the apparatus to perform at least the following: causing receiving, from a user equipment, of a request to switch from a first functionality to at least one second functionality, wherein the first functionality may be in an active mode, wherein the at least one second functionality may be in a standby mode; causing transmitting, to the user equipment, of a request for validation of the at least one second functionality in response to a determination that the at least one second functionality was not previously validated with respect to at least one condition; causing receiving, from the user equipment, of an acknowledgment of the request for validation of the at least one second functionality; causing transmitting, to the user equipment, of a plurality of reference signals; causing receiving, from the user equipment, of at least one report with respect to the at least one second functionality and the plurality of reference signals; and causing providing of the at least one second report to a network side validation entity for the validation of the at least one second functionality.

A computer implemented system comprising: at least one processor and at least one non-transitory memory storing instructions that, when executed by the at least one processor, cause the system at least to perform: causing receiving, from a user equipment, of a request to switch from a first functionality to at least one second functionality, wherein the first functionality may be in an active mode, wherein the at least one second functionality may be in a standby mode; causing transmitting, to the user equipment, of a request for validation of the at least one second functionality in response to a determination that the at least one second functionality was not previously validated with respect to at least one condition; causing receiving, from the user equipment, of an acknowledgment of the request for validation of the at least one second functionality; causing transmitting, to the user equipment, of a plurality of reference signals; causing receiving, from the user equipment, of at least one report with respect to the at least one second functionality and the plurality of reference signals; and causing providing of the at least one second report to a network side validation entity for the validation of the at least one second functionality.

A computer implemented system comprising: means for causing receiving, from a user equipment, of a request to switch from a first functionality to at least one second functionality, wherein the first functionality may be in an active mode, wherein the at least one second functionality may be in a standby mode; means for causing transmitting, to the user equipment, of a request for validation of the at least one second functionality in response to a determination that the at least one second functionality was not previously validated with respect to at least one condition; means for causing receiving, from the user equipment, of an acknowledgment of the request for validation of the at least one second functionality; means for causing transmitting, to the user equipment, of a plurality of reference signals; means for causing receiving, from the user equipment, of at least one report with respect to the at least one second functionality and the plurality of reference signals; and means for causing providing of the at least one second report to a network side validation entity for the validation of the at least one second functionality.

In accordance with one example embodiment, an apparatus may comprise: at least one processor; and at least one memory storing instructions that, when executed by the at least one processor, cause the apparatus at least to: receive, from a user equipment, a request to switch from a first functionality to at least one second functionality, wherein the first functionality may be in an active mode, wherein the at least one second functionality may be in a standby mode; transmit, to the user equipment, a request for validation of the at least one second functionality; receive, from the user equipment, a request for a configuration for the validation of the at least one second functionality; perform the configuration for the validation of the at least one second functionality; transmit, to the user equipment, a plurality of reference signals; and receive, from the user equipment, at least one first report with respect to the first functionality and the plurality of reference signals.

The plurality of reference signals may comprise at least one validation specific reference signal.

The example apparatus may be further configured to: receive a validation report.

The example apparatus may be further configured to: update a network model repository or a network functionality repository based, at least partially, on the validation report.

The example apparatus may be further configured to: switch the at least one second functionality from the standby mode to the active mode based, at least partially, on an indication that the validation of the at least one second functionality is successful.

In accordance with one aspect, an example method may be provided comprising: receiving, with a base station from a user equipment, a request to switch from a first functionality to at least one second functionality, wherein the first functionality may be in an active mode, wherein the at least one second functionality may be in a standby mode; transmitting, to the user equipment, a request for validation of the at least one second functionality; receiving, from the user equipment, a request for a configuration for the validation of the at least one second functionality; performing the configuration for the validation of the at least one second functionality; transmitting, to the user equipment, a plurality of reference signals; and receiving, from the user equipment, at least one first report with respect to the first functionality and the plurality of reference signals.

The plurality of reference signals may comprise at least one validation specific reference signal.

The example method may further comprise: receiving a validation report.

The example method may further comprise: updating a network model repository or a network functionality repository based, at least partially, on the validation report.

The example method may further comprise: switching the at least one second functionality from the standby mode to the active mode based, at least partially, on an indication that the validation of the at least one second functionality is successful.

In accordance with one example embodiment, an apparatus may comprise: circuitry configured to perform: receiving from a user equipment, a request to switch from a first functionality to at least one second functionality, wherein the first functionality may be in an active mode, wherein the at least one second functionality may be in a standby mode; circuitry configured to perform: transmitting, to the user equipment, a request for validation of the at least one second functionality; circuitry configured to perform: receiving, from the user equipment, a request for a configuration for the validation of the at least one second functionality; circuitry configured to perform: performing the configuration for the validation of the at least one second functionality; circuitry configured to perform: transmitting, to the user equipment, a plurality of reference signals; and circuitry configured to perform: receiving, from the user equipment, at least one first report with respect to the first functionality and the plurality of reference signals.

In accordance with one example embodiment, an apparatus may comprise: processing circuitry; memory circuitry including computer program code, the memory circuitry and the computer program code configured to, with the processing circuitry, enable the apparatus to: receive, from a user equipment, a request to switch from a first functionality to at least one second functionality, wherein the first functionality may be in an active mode, wherein the at least one second functionality may be in a standby mode; transmit, to the user equipment, a request for validation of the at least one second functionality; receive, from the user equipment, a request for a configuration for the validation of the at least one second functionality; perform the configuration for the validation of the at least one second functionality; transmit, to the user equipment, a plurality of reference signals; and receive, from the user equipment, at least one first report with respect to the first functionality and the plurality of reference signals.

In accordance with one example embodiment, an apparatus may comprise means for performing: receiving, from a user equipment, a request to switch from a first functionality to at least one second functionality, wherein the first functionality may be in an active mode, wherein the at least one second functionality may be in a standby mode; transmitting, to the user equipment, a request for validation of the at least one second functionality; receiving, from the user equipment, a request for a configuration for the validation of the at least one second functionality; the configuration for the validation of the at least one second functionality; transmitting, to the user equipment, a plurality of reference signals; and receiving, from the user equipment, at least one first report with respect to the first functionality and the plurality of reference signals.

The plurality of reference signals may comprise at least one validation specific reference signal.

The means may be further configured to perform: receiving a validation report.

The means may be further configured to perform: updating a network model repository or a network functionality repository based, at least partially, on the validation report.

The means may be further configured to perform: switching the at least one second functionality from the standby mode to the active mode based, at least partially, on an indication that the validation of the at least one second functionality is successful.

In accordance with one example embodiment, a non-transitory computer-readable medium comprising instructions stored thereon which, when executed with at least one processor, cause the at least one processor to: cause receiving, from a user equipment, of a request to switch from a first functionality to at least one second functionality, wherein the first functionality may be in an active mode, wherein the at least one second functionality may be in a standby mode; cause transmitting, to the user equipment, of a request for validation of the at least one second functionality; cause receiving, from the user equipment, of a request for a configuration for the validation of the at least one second functionality; the configuration for the validation of the at least one second functionality; cause transmitting, to the user equipment, of a plurality of reference signals; and cause receiving, from the user equipment, of at least one first report with respect to the first functionality and the plurality of reference signals.

In accordance with one example embodiment, a non-transitory computer-readable medium comprising program instructions stored thereon for performing at least the following: causing receiving, from a user equipment, of a request to switch from a first functionality to at least one second functionality, wherein the first functionality may be in an active mode, wherein the at least one second functionality may be in a standby mode; causing transmitting, to the user equipment, of a request for validation of the at least one second functionality; causing receiving, from the user equipment, of a request for a configuration for the validation of the at least one second functionality; the configuration for the validation of the at least one second functionality; causing transmitting, to the user equipment, of a plurality of reference signals; and causing receiving, from the user equipment, of at least one first report with respect to the first functionality and the plurality of reference signals.

In accordance with another example embodiment, a non-transitory program storage device readable by a machine may be provided, tangibly embodying instructions executable by the machine for performing operations, the operations comprising: causing receiving, from a user equipment, of a request to switch from a first functionality to at least one second functionality, wherein the first functionality may be in an active mode, wherein the at least one second functionality may be in a standby mode; causing transmitting, to the user equipment, of a request for validation of the at least one second functionality; causing receiving, from the user equipment, of a request for a configuration for the validation of the at least one second functionality; the configuration for the validation of the at least one second functionality; causing transmitting, to the user equipment, of a plurality of reference signals; and causing receiving, from the user equipment, of at least one first report with respect to the first functionality and the plurality of reference signals.

In accordance with another example embodiment, a non-transitory computer-readable medium comprising instructions that, when executed by an apparatus, cause the apparatus to perform at least the following: causing receiving, from a user equipment, of a request to switch from a first functionality to at least one second functionality, wherein the first functionality may be in an active mode, wherein the at least one second functionality may be in a standby mode; causing transmitting, to the user equipment, of a request for validation of the at least one second functionality; causing receiving, from the user equipment, of a request for a configuration for the validation of the at least one second functionality; the configuration for the validation of the at least one second functionality; causing transmitting, to the user equipment, of a plurality of reference signals; and causing receiving, from the user equipment, of at least one first report with respect to the first functionality and the plurality of reference signals.

A computer implemented system comprising: at least one processor and at least one non-transitory memory storing instructions that, when executed by the at least one processor, cause the system at least to perform: causing receiving, from a user equipment, of a request to switch from a first functionality to at least one second functionality, wherein the first functionality may be in an active mode, wherein the at least one second functionality may be in a standby mode; causing transmitting, to the user equipment, of a request for validation of the at least one second functionality; causing receiving, from the user equipment, of a request for a configuration for the validation of the at least one second functionality; the configuration for the validation of the at least one second functionality; causing transmitting, to the user equipment, of a plurality of reference signals; and causing receiving, from the user equipment, of at least one first report with respect to the first functionality and the plurality of reference signals.

A computer implemented system comprising: means for causing receiving, from a user equipment, of a request to switch from a first functionality to at least one second functionality, wherein the first functionality may be in an active mode, wherein the at least one second functionality may be in a standby mode; means for causing transmitting, to the user equipment, of a request for validation of the at least one second functionality; means for causing receiving, from the user equipment, of a request for a configuration for the validation of the at least one second functionality; means for performing the configuration for the validation of the at least one second functionality; means for causing transmitting, to the user equipment, of a plurality of reference signals; and means for causing receiving, from the user equipment, of at least one first report with respect to the first functionality and the plurality of reference signals.

In accordance with one example embodiment, an apparatus may comprise: at least one processor; and at least one memory storing instructions that, when executed by the at least one processor, cause the apparatus at least to: obtain a result of at least one functionality, wherein the at least one functionality may be in a standby mode; and provide a functionality verification report based on the result.

The example apparatus may be further configured to: determine whether validation of the result is successful; in response to a determination that the validation of the result is successful, provide an indication that the at least one functionality can be used; and in response to a determination that the validation of the result is unsuccessful, provide an indication that the at least one functionality cannot be used.

The example apparatus may be further configured to: obtain a further result of a further functionality, wherein the further functionality may be in an active mode; and determine whether validation of the result is successful based, at least partially, on the result and the further result.

The result may be obtained from a user equipment.

The example apparatus may be further configured to: receive, from the user equipment, a request for the validation of the at least one functionality.

The example apparatus may be further configured to: transmit, to a base station via the user equipment, the functionality verification report.

The result may be obtained from a base station.

The example apparatus may be further configured to: transmit, to a user equipment via the base station, a request for the validation of the at least one functionality.

The example apparatus may be further configured to: receive, from a user equipment via the base station, a request for the validation of the at least one functionality.

The example apparatus may be further configured to: determine whether validation of the result is successful based, at least partially, on information obtained from at least one repository.

In accordance with one aspect, an example method may be provided comprising: obtaining, with a validation entity, a result of at least one functionality, wherein the at least one functionality may be in a standby mode; and providing a functionality verification report based on the result.

The example method may further comprise: determining whether validation of the result is successful; in response to a determination that the validation of the result is successful, providing an indication that the at least one functionality can be used; and in response to a determination that the validation of the result is unsuccessful, providing an indication that the at least one functionality cannot be used.

The example method may further comprise: obtaining a further result of a further functionality, wherein the further functionality may be in an active mode; and determining whether validation of the result is successful based, at least partially, on the result and the further result.

The result may be obtained from a user equipment.

The example method may further comprise: receiving, from the user equipment, a request for the validation of the at least one functionality.

The example method may further comprise: transmitting, to a base station via the user equipment, the functionality verification report.

The result may be obtained from a base station.

The example method may further comprise: transmitting, to a user equipment via the base station, a request for the validation of the at least one functionality.

The example method may further comprise: receiving, from a user equipment via the base station, a request for the validation of the at least one functionality.

The example method may further comprise: determining whether validation of the result is successful based, at least partially, on information obtained from at least one repository.

In accordance with one example embodiment, an apparatus may comprise: circuitry configured to perform: obtaining a result of at least one functionality, wherein the at least one functionality may be in a standby mode; and circuitry configured to perform: providing a functionality verification report based on the result.

In accordance with one example embodiment, an apparatus may comprise: processing circuitry; memory circuitry including computer program code, the memory circuitry and the computer program code configured to, with the processing circuitry, enable the apparatus to: obtain a result of at least one functionality, wherein the at least one functionality may be in a standby mode; and provide a functionality verification report based on the result.

In accordance with one example embodiment, an apparatus may comprise means for performing: obtaining a result of at least one functionality, wherein the at least one functionality may be in a standby mode; and providing a functionality verification report based on the result.

The means may be further configured to perform: determining whether validation of the result is successful; in response to a determination that the validation of the result is successful, providing an indication that the at least one functionality can be used; and in response to a determination that the validation of the result is unsuccessful, providing an indication that the at least one functionality cannot be used.

The means may be further configured to perform: obtaining a further result of a further functionality, wherein the further functionality may be in an active mode; and determining whether validation of the result is successful based, at least partially, on the result and the further result.

The result may be obtained from a user equipment.

The means may be further configured to perform: receiving, from the user equipment, a request for the validation of the at least one functionality.

The means may be further configured to perform: transmitting, to a base station via the user equipment, the functionality verification report.

The result may be obtained from a base station.

The means may be further configured to perform: transmitting, to a user equipment via the base station, a request for the validation of the at least one functionality.

The means may be further configured to perform: receiving, from a user equipment via the base station, a request for the validation of the at least one functionality.

The means may be further configured to perform: determining whether validation of the result is successful based, at least partially, on information obtained from at least one repository.

In accordance with one example embodiment, a non-transitory computer-readable medium comprising instructions stored thereon which, when executed with at least one processor, cause the at least one processor to: cause obtaining of a result of at least one functionality, wherein the at least one functionality may be in a standby mode; and cause providing of a functionality verification report based on the result.

In accordance with one example embodiment, a non-transitory computer-readable medium comprising program instructions stored thereon for performing at least the following: causing obtaining of a result of at least one functionality, wherein the at least one functionality may be in a standby mode; and causing providing of a functionality verification report based on the result.

In accordance with another example embodiment, a non-transitory program storage device readable by a machine may be provided, tangibly embodying instructions executable by the machine for performing operations, the operations comprising: causing obtaining of a result of at least one functionality, wherein the at least one functionality may be in a standby mode; and causing providing of a functionality verification report based on the result.

In accordance with another example embodiment, a non-transitory computer-readable medium comprising instructions that, when executed by an apparatus, cause the apparatus to perform at least the following: causing obtaining of a result of at least one functionality, wherein the at least one functionality may be in a standby mode; and causing providing of a functionality verification report based on the result.

A computer implemented system comprising: at least one processor and at least one non-transitory memory storing instructions that, when executed by the at least one processor, cause the system at least to perform: causing obtaining of a result of at least one functionality, wherein the at least one functionality may be in a standby mode; and causing providing of a functionality verification report based on the result.

A computer implemented system comprising: means for causing obtaining of a result of at least one functionality, wherein the at least one functionality may be in a standby mode; and means for causing providing of a functionality verification report based on the result.

The term "non-transitory," as used herein, is a limitation of the medium itself (i.e. tangible, not a signal) as opposed to a limitation on data storage persistency (e.g., RAM vs. ROM).

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modification and variances which fall within the scope of the appended claims.

## Claims

1. An apparatus, comprising:
means for determining that a validation of at least one second functionality has been triggered, wherein a first functionality is in an active mode, wherein the at least one second functionality is in a standby mode;
means for transmitting a request for the validation of the at least one second functionality;
means for providing, from a base station, a plurality of reference signals;
means for determining a result of the at least one second functionality based, at least partially, on at least one reference signal of the plurality of reference signals; and
means for providing the result of the at least one second functionality for the validation of the at least one second functionality.

2. The apparatus of claim 1, wherein the determining that the validation of the at least one second functionality has been triggered is in response to at least one of:
an update with respect to the at least one second functionality,
training with respect to the at least one second functionality,
a change in a network configuration,
a change in a user equipment configuration,
a change in a propagation channel, or
a handover.

3. The apparatus of claim 1 or 2, wherein the request for the validation of the at least one second functionality comprises one of:
at least one applicability conditions for the at least one second functionality,
at least one updated configuration,
at least one input for the at least one second functionality,
at least one output for the at least one second functionality, or
at least one reference signal configuration.

4. The apparatus of any one of claims 1-3, wherein the result of the at least one second functionality is provided to a base station for the validation of the at least one second functionality; and wherein the means for providing the result of the at least one second functionality comprises:
means for transmitting, to the base station, compressed channel state information feedback, wherein the compressed channel state information feedback comprises an indication that the result of the at least one second functionality are provided for validation.

5. The apparatus of any one of claims 1-3, further comprises:
means for determining a result of the first functionality based, at least partially, on at least one reference signal of the plurality of reference signals, and wherein the plurality of reference signals comprise at least one validation specific reference signal; and
means for providing the result of the first functionality for the validation of the at least one second functionality,
wherein the result of the first functionality and the result of the at least one second functionality are provided to a user equipment side validation entity for the validation of the at least one second functionality.

6. The apparatus of claim 5, further comprises:
means for receiving, from the user equipment side validation entity, a determination that the at least one second functionality is validated; and
means for providing a validation report to a base station based on a determination of whether the at least one second functionality is validated.

7. The apparatus of any one of claims 1-6, wherein the means for providing the result of the at least one second functionality to the base station comprises:
means for transmitting, to the base station, at least one of:
beam prediction feedback,
channel state information prediction feedback,
predicted reference signal received power feedback, or
predicted channel state information feedback.

8. An apparatus, comprising:
means for receiving, from a user equipment, a request for validation of at least one second functionality, wherein a first functionality is in an active mode, wherein the at least one second functionality is in a standby mode;
means for transmitting, to the user equipment, a plurality of reference signals;
means for receiving, from the user equipment, at least one report with respect to the at least one second functionality and the plurality of reference signals; and
means for providing the at least one report to a network side validation entity for the validation of the at least one second functionality.

9. The apparatus of claims 8, wherein the at least one report comprises compressed channel state information feedback, wherein the compressed channel state information feedback comprises an indication that the result of the at least one second functionality is provided for validation.

10. The apparatus of any one of claims 8-9, wherein the at least one report comprises at least one of:
beam prediction feedback,
channel state information prediction feedback,
predicted reference signal received power feedback, or
predicted channel state information feedback.

11. An apparatus comprising:
means for determining to switch from a first functionality to at least one second functionality, wherein a first functionality is in an active mode, wherein the at least one second functionality is in a standby mode;
means for transmitting a request to switch from the first functionality to the at least one second functionality;
means for receiving, from a base station, a request for validation of the at least one second functionality;
means for receiving, from the base station, a plurality of reference signals;
means for determining a result of the at least one second functionality based, at least partially, on at least one reference signal of the plurality of reference signals; and
means for providing the result of the at least one second functionality for the validation of the at least one second functionality.

12. An apparatus comprising:
means for receiving, from a user equipment, a request to switch from a first functionality to at least one second functionality, wherein the first functionality is in an active mode, wherein the at least one second functionality is in a standby mode;
means for transmitting, to the user equipment, a request for validation of the at least one second functionality in response to a determination that the at least one second functionality was not previously validated with respect to at least one condition;
means for receiving, from the user equipment, an acknowledgment of the request for validation of the at least one second functionality;
means for transmitting, to the user equipment, a plurality of reference signals;
means for receiving, from the user equipment, at least one report with respect to the at least one second functionality and the plurality of reference signals; and
means for providing the at least one second report to a network side validation entity for the validation of the at least one second functionality.

13. An apparatus, comprising:
means for obtaining a result of at least one functionality wherein the at least one functionality is in a standby mode; and
means for providing a functionality verification report based on the result.

14. The apparatus of claim 13, further comprising:
means for determining whether validation of the result is successful;
means for, in response to a determination that the validation of the result is successful, providing an indication that the at least one functionality can be used; and
means for, in response to a determination that the validation of the result is unsuccessful, providing an indication that the at least one functionality cannot be used.

15. The apparatus of claim 13,
wherein the result is obtained from a user equipment; and wherein the apparatus further comprising means for receiving, from the user equipment, a request for the validation of the at least one functionality.
wherein the result is obtained from a base station; and wherein the apparatus further comprising means for transmitting, to a user equipment via the base station, a request for the validation of the at least one functionality.
